(19) **Europäisches Patentamt / European Patent Office / Office européen des brevets**

(11) **EP 2 338 157 B1**

(12) **FASCICULE DE BREVET EUROPEEN**

(45) Date de publication et mention
de la délivrance du brevet:
**31.10.2012 Bulletin 2012/44**

(21) Numéro de dépôt: **09820277.3**

(22) Date de dépôt: **09.10.2009**

(51) Int Cl.:
*G01T 3/00* (2006.01)    *G01V 5/10* (2006.01)
*G21C 17/108* (2006.01)    *G01T 1/185* (2006.01)

(86) Numéro de dépôt international:
**PCT/EP2009/063146**

(87) Numéro de publication internationale:
**WO 2010/043554 (22.04.2010 Gazette 2010/16)**

(54) **DISPOSITIF DE MESURE EN LIGNE D'UN FLUX DE NEUTRONS RAPIDES ET EPITHERMIQUES**

EINRICHTUNG ZUR ONLINE-MESSUNG SCHNELLER UND EPITHERMISCHER NEUTRONEN

DEVICE FOR THE ON LINE MEASUREMENT OF RAPID AND EPITHERMAL NEUTRONS

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **13.10.2008 FR 0856922**

(43) Date de publication de la demande:
**29.06.2011 Bulletin 2011/26**

(73) Titulaires:
- **Commissariat à l'Énergie Atomique et aux Énergies Alternatives 75015 Paris (FR)**
- **Sck.Cen 1160 Bruxelles (BE)**

(72) Inventeurs:
- **ORIOL, Ludovic F-84120 Pertuis (FR)**
- **LESCOP, Bernard F-91240 Saint Michel Sur Orge (FR)**
- **VERMEEREN, Ludo B-3200 Aarschot (BE)**

(74) Mandataire: **Ilgart, Jean-Christophe BREVALEX 95 rue d'Amsterdam 75378 Paris Cedex 8 (FR)**

(56) Documents cités:
**US-A- 3 752 735**

- **ALMAVIVA S ET AL: "Thermal and fast neutron detection in chemical vapor deposition single-crystal diamond detectors" 3 mars 2008 (2008-03-03), JOURNAL OF APPLIED PHYSICS, AMERICAN INSTITUTE OF PHYSICS. NEW YORK, US, PAGE(S) 54501 - 54501 , XP012109494 ISSN: 0021-8979 le document en entier**
- **MCGREGOR D S ET AL: "Micro-pocket fission detectors (MPFD) for in-core neutron flux monitoring" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 554, no. 1-3, 1 décembre 2005 (2005-12-01), pages 494-499, XP025295788 ISSN: 0168-9002 [extrait le 2005-12-01]**
- **ISHIKAWA M ET AL: "Development of a wide-range paired scintillator with optical fiber neutron monitor for BNCT irradiation field study" NUCLEAR INSTRUMENTS & METHODS IN PHYSICS RESEARCH, SECTION - A: ACCELERATORS, SPECTROMETERS, DETECTORS AND ASSOCIATED EQUIPMENT, ELSEVIER, AMSTERDAM, NL, vol. 551, no. 2-3, 11 octobre 2005 (2005-10-11), pages 448-457, XP025294814 ISSN: 0168-9002 [extrait le 2005-10-11]**

**EP 2 338 157 B1**

- **FILLIATRE P ET AL: "Reasons why Plutonium 242 is the best fission chamber deposit to monitor the fast component of a high neutron flux" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL, vol. 593, no. 3, 11 août 2008 (2008-08-11) , pages 510-518, XP025472040 ISSN: 0168-9002 [extrait le 2008-06-01]**

**Description**

Domaine technique et art antérieur

La présente invention concerne un dispositif de mesure en ligne d'un flux de neutrons rapides et épithermiques sur un intervalle d'énergie [$E_{min}$, $E_{max}$].

A titre d'exemple non limitatif, l'invention s'applique de façon particulièrement avantageuse à la mesure en ligne d'un flux de neutrons rapides et épithermiques dans un coeur de réacteur, avec les contraintes suivantes :

- le flux neutronique global est élevé (par exemple 1E14 n/cm$^2$/s ou plus) ;
- la contribution des neutrons thermiques au flux neutronique global est importante ;
- le rayonnement gamma est intense ;
- on veut une mesure en temps réel (en ligne) pour suivre les évolutions temporelles du flux rapide ;
- on veut une mesure effectuée en coeur, plus communément appelée mesure « in-core ».

Les contraintes mentionnées ci-dessus s'appliquent à l'instrumentation en réacteur d'essai de matériaux, plus généralement désignée sous l'appellation d'instrumentation MTR (MTR pour « Material Testing Reactor »), ou à la surveillance des coeurs de réacteur de puissance (plus généralement désignée sous l'appellation de « surveillance « in-core » »).

La mesure des flux de neutrons rapides s'effectue actuellement à l'aide de deux classes de détecteurs : les détecteurs par activation et les détecteurs en ligne.

Les détecteurs par activation sont des dosimètres dont les matériaux sont convenablement choisis pour fournir la fluence neutronique dans une bande d'énergie d'intérêt. Il s'agit d'une méthode éprouvée (cf. référence [1]) dont les inconvénients sont les suivants :

- les dosimètres doivent être retirés du coeur pour être analysés (il s'agit donc d'une mesure a posteriori disponible après la fin du cycle du réacteur) ;
- la quantité obtenue est le flux intégré sur la durée de l'irradiation et il n'est alors pas possible d'avoir accès aux évolutions temporelles.

Les détecteurs en ligne, contrairement aux détecteurs précédents, permettent une mesure en ligne dans le coeur du réacteur. Selon l'art connu, les détecteurs en ligne sont des chambres à fission à uranium sous écran absorbeur des neutrons thermiques. Les chambres à fission sont des détecteurs neutroniques bien connus et très répandus pour le contrôle neutronique des réacteurs (détecteurs « ex-core » ou « in-core »). Certaines chambres, dites miniatures voire sub-miniatures, se présentent extérieurement sous la forme de cylindres de diamètre de 4mm ou moins, ce qui se prête particulièrement bien à l'instrumentation « in-core », domaine visé dans la présente demande de brevet. La demande de brevet français déposée, au nom du Commissariat à l'Énergie Atomique, le 29 novembre 1994 et publiée sous le numéro 2 727 526 (cf. référence [2]) donne une description détaillée d'une telle chambre à fission. La détection des neutrons se fait par l'intermédiaire d'un dépôt fissile qui est le siège de fissions nucléaires. Ce dépôt est, dans une très grande majorité de cas, constitué d'uranium U235, ce qui est bien adapté à la mesure des neutrons thermiques ou à la mesure des neutrons rapides en l'absence de composante thermique. Pour la mesure des neutrons rapides avec les contraintes exposées ci-dessus, l'utilisation de l'uranium U238, pour lequel la section efficace de fission présente un seuil, est - a priori - préférentiellement indiquée. Une difficulté s'élève toutefois: sous l'effet des captures des neutrons thermiques, l'uranium U238 se transmute en plutonium Pu239, isotope fissile vis-à-vis des neutrons thermiques. Pour pallier cette difficulté, Y. Kashchuk et al. (cf. référence [3]) ont préconisé l'utilisation d'écrans (B10, Cd, Gd ...) dont le rôle est d'absorber les neutrons thermiques avant qu'ils n'atteignent le détecteur proprement dit. Cette solution soulève toutefois des difficultés majeures : encombrement difficilement compatible avec l'utilisation « in-core », perturbation locale du flux thermique, tenue mécanique, usure sous l'irradiation, échauffement du détecteur.

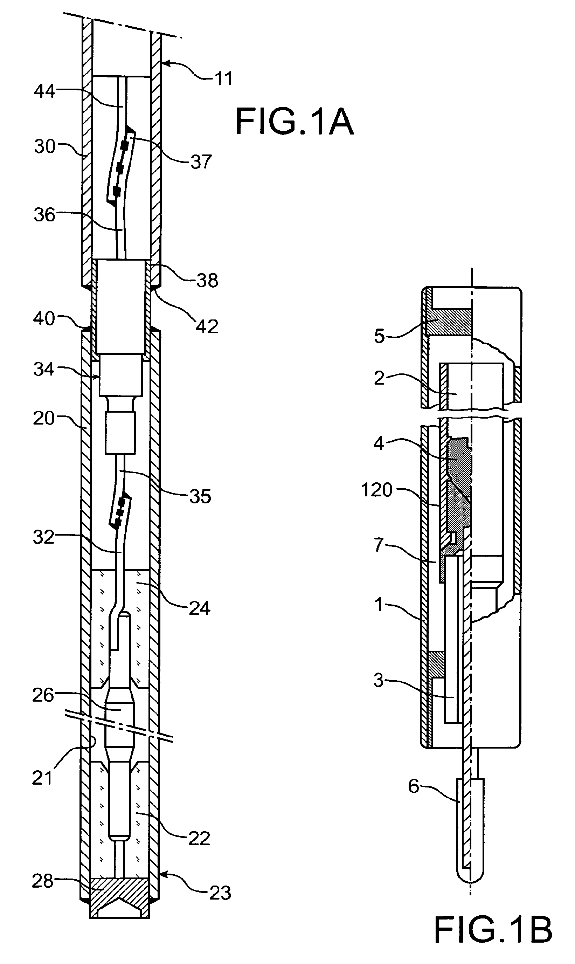

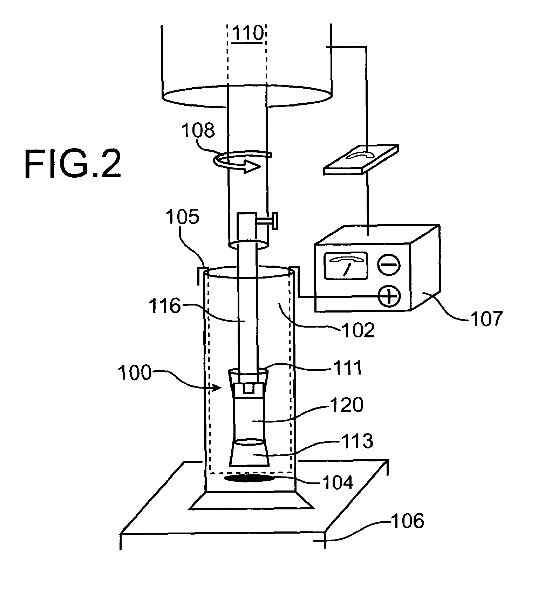

Un autre type de détecteur en ligne est connu de la Demanderesse. Cet autre type de détecteur en ligne est un art antérieur qui est décrit dans une On connaît encore la publication intitulée "Thermal and fast neutron detection in chemical vapor deposition single-crystal diamond detectors", publiée le 3 mars 2008, Journal of Applied Physics 103, 054501. Ce document décrit un dispositif de mesure en ligne d'un flux de neutrons. En particulier, avec le dispositif décrit dans ce document, une mesure de flux de neutrons rapides est effectuée dans une couche appelée "CVD intrinsic" alors qu'une mesure de flux de neutrons thermiques est effectuée grâce à une couche supplémentaire de $^6$LiF enrichi déposée sur le même détecteur. demande de brevet français, déposée par la Demanderesse le 21 décembre 2007 sous le numéro d'enregistrement national 07 60229 et publiée après le dépôt de la présente demande avec numéro de publication FR 2 925750. Cet autre type des détecteur est constitué par une chambre à fission contenant du plutonium Pu242 pur à au moins 99, 5%. Les figures 1A et 1B représentent deux exemples d'une telle chambre à fission et la figure 2 représente un dispositif apte à effectuer le dépôt de plutonium Pu242 dans ces chambres à fission. L'avantage d'une telle chambre à fission est de répondre aux besoins définis précédemment sans utiliser d'écran aux neutrons thermiques.

La figure 1A représente un premier exemple de chambre à fission contenant du plutonium Pu242 pur à au moins 99,5%. En termes de structure mécanique, cette chambre à fission est identique à celle décrite dans la demande de brevet publiée sous le numéro 2 727 526.

La référence 20 désigne un tube, de diamètre extérieur sensiblement égal, par exemple, à 1,5mm et qui sert à la fois d'enveloppe à la chambre à fission et, pour au moins une partie désignée par la référence 21, de cathode. Ce tube est par exemple en Inconel ou en inox.

A l'intérieur de la chambre, deux isolateurs 22, 24, par exemple en rubis, supportent une anode centrale 26 recouverte d'un dépôt fissile à seuil, par exemple du plutonium Pu242, dont le pourcentage de pureté est au moins égal à 99,5 %.

Le tube 20 est fermé à une de ses extrémités 23 par un bouchon 28, par exemple en inox. Lors de son utilisation, la chambre est remplie d'un gaz neutre, par exemple de l'argon ou de l'argon additionné d'une faible teneur d'azote (par exemple 4%) à une pression de quelques bars (par exemple 5 bars), et le bouchon 28 sert à la fois au remplissage et à l'étanchéité de la chambre. L'anode 26 est reliée à des éléments conducteurs 32, 36 pour transmettre un signal électrique vers l'extérieur de la chambre. Ces éléments conducteurs 32, 36 sont eux-mêmes reliés à l'élément conducteur 44 d'un câble 11 de liaison qui relie l'ensemble à un dispositif de connexion comme cela est décrit dans la demande de brevet 2 727 526.

Le conducteur 32 est relié à l'extrémité 35 du conducteur 36, à l'intérieur du tube 20 qui délimite la chambre de fission, tandis que l'autre extrémité 37 du conducteur 36 qui traverse le bouchon 34, en alumine de grande pureté, est reliée au conducteur 44 à l'intérieur du prolongement du fourreau métallique extérieur 30 du câble 11. Le bouchon 34 est serti, au moins en partie, dans une gaine métallique 38 pouvant être soudée sur l'extrémité 40 du tube 20.

La figure 1B représente un deuxième exemple de chambre à fission contenant du plutonium Pu242 pur à au moins 99,5%.

Il comporte un corps de chambre 1, en un matériau électriquement conducteur, qui est l'enveloppe extérieure du dispositif. On peut également réaliser l'enceinte en un tout autre matériau et déposer une couche de matériau électriquement conducteur sur l'intérieur des parois de l'enceinte pour former l'électrode externe 1. Des moyens 2, également en un matériau électriquement conducteur, forment un support, sur lequel est déposée une fine couche 120 de radioélément, soit, conformément à la présente invention, du plutonium 242 de pureté au moins 99,5 %. En fonctionnement, ces moyens 2 formeront par exemple une anode, le corps 1 formant cathode. Entre cathode et anode sera emprisonné un gaz ionisable, par exemple de l'argon à 1,5 bar.

Un passage étanche 3 (métal et alumine) maintient le substrat 2 et permet la connexion électrique vers l'extérieur tout en assurant l'étanchéité d'une extrémité de la chambre.

Une vis 4 permet de bloquer le substrat sur le passage étanche.

La référence 5 désigne un bouchon, et la référence 6 une surépaisseur soudée sur le fil du passage étanche pour faciliter la connexion électrique.

Une telle chambre à fission peut avoir, par exemple, un diamètre externe de l'ordre de 4mm.

Quel que soit le mode de réalisation de la chambre à fission au plutonium Pu242, une fine couche de matière fissile comprenant du plutonium Pu242 est déposée sur l'une des électrodes ou sur les deux électrodes. L'enceinte est transparente à la transmission des neutrons, c'est-à-dire qu'elle laisse passer les neutrons à travers ses parois. En d'autres termes, le matériau constitutif de la paroi de l'enceinte présente une faible section efficace de capture neutronique. Les électrodes sont soit réalisées totalement en matériau électriquement conducteur, soit revêtues d'une couche de matériau électriquement conducteur.

La couche de plutonium Pu242 peut être réalisée par électrodéposition, par exemple à l'aide d'un dispositif tel que celui représenté en figure 2.

Le plutonium Pu242 à déposer peut se présenter sous forme d'une solution liquide 100, placée dans un bécher 102, dans une solution d'électrolyse comprenant un mélange d'acide nitrique et d'oxalate d'ammonium.

L'électrode ou le support 120 sur laquelle/lequel le dépôt est à réaliser est maintenu(e) par deux embouts 111, 113 en téflon, à l'extrémité d'une tige 116, par exemple en platine recouvert d'un film en téflon. L'ensemble est placé dans la solution. Celle-ci peut être agitée pour rester homogène, par exemple en plaçant un barreau aimanté 104 au fond du bécher 102 et en plaçant ce dernier sur un agitateur magnétique 106.

Un fil 105, en un matériau électriquement conducteur (par exemple en platine), est placé dans la solution 102. Des moyens d'alimentation 107 permettent de faire circuler un courant électrique dans ce fil et dans la solution. Ce courant va faire se déplacer le plutonium de la solution, qui vient se fixer sur l'électrode ou le support 120.

On peut éventuellement mettre l'électrode ou le support 120 en rotation, à l'aide d'un moteur 110, de manière à obtenir un dépôt homogène sur toute la surface en contact avec la solution d'électrolyse. Par exemple, on peut faire tourner l'électrode interne à 60 tours/min, comme indiqué par la flèche 108.

Ce procédé peut s'appliquer aussi bien à l'électrode interne qu'à l'électrode externe. Si l'on souhaite que le plutonium ne soit déposé que sur les parois intérieures de l'électrode externe (celle-ci ayant alors par exemple une forme cylindrique), on recouvre la paroi externe de l'électrode externe d'une couche de matériau de protection, par exemple une couche de téflon.

Dans les cas présentés ci-dessus, en faisant circuler un courant d'environ 350mA pendant deux heures, on peut déposer 90 à 95 % du plutonium présent dans la solution d'électrolyse sur l'électrode ou le support 120.

Un problème de la chambre à fission au plutonium Pu242 est la présence d'impuretés fissiles (Pu239 et Pu241) dans le dépôt qui confère à la chambre une sensibilité aux neutrons thermiques, laquelle présence, même si elle est faible, ne peut pas être totalement négligée. De plus, la production d'isotopes fissiles par transmutations successives, même si elle est considérablement inférieure à celle observée pour l'uranium U238, contribue à accroître cette sensibilité thermique au cours de l'irradiation. La chambre à fission au plutonium Pu242 ne peut donc être utilisée sans écran que dans des circonstances bien particulières, à savoir un flux thermique pas trop élevé ou des irradiations de courtes durées.

Il existe donc un réel besoin de réaliser un système de mesure permettant de discriminer, dans le signal produit par une chambre à fission à seuil, la contribution due aux neutrons rapides (grandeur d'intérêt) de celle due aux neutrons thermiques. Tel que défini dans la revendication 1.

Exposé de l'invention

Pour répondre aux besoins mentionnés ci-dessus, l'invention propose un dispositif de mesure en ligne d'un flux de neutrons rapides et épithermiques

Selon une caractéristique supplémentaire de l'invention, le dispositif de mesure comprend, en outre, des moyens pour calculer un flux neutronique complet $\varphi(t_n, E)$ à l'aide de l'équation :

$$\varphi(t_n, E) = \varphi_1(t_n) \cdot f_1(E) + \varphi_2(t_n) \cdot f_2(E, \theta),$$

où

- $f_1(E) = f_{fiss}(E) + \alpha f_{epi}(E)$, et
- $f_2(E, \theta) = f_{mxw}(E, \theta)$,

$f_{fiss}(E)$ étant une composante de fission du flux de neutrons, $f_{epi}(E)$ étant une composante épithermique du flux de neutrons, $f_{mxw}(E, \theta)$ étant une composante maxwellienne du flux de neutrons et $\alpha$ étant un coefficient de proportionnalité entre la composante épithermique du flux de neutrons et la composante de fission du flux de neutrons.

Selon une autre caractéristique supplémentaire de l'invention, le dispositif de mesure comprend, en outre, des moyens pour calculer, sur l'intervalle $[E_{min}, E_{max}]$, $N_r$ résultats intégraux aux instants $t_n$, $N_r$ étant un nombre entier supérieur ou égal à 1, un résultat intégral de rang $k$ ($k=1, 2, ..., N_r$) étant donné par l'équation :

$$R_k(t_n) = m_{k1} \cdot \varphi_1(t_n) + m_{k2}(\theta) \cdot \varphi_2(t_n)$$

avec

$$m_{k1} = \int_{E_{min}}^{E_{max}} f_1(E) \cdot Y_k(E)\, dE,$$

et

$$m_{k2} = \int_{E_{min}}^{E_{max}} f_2(E, \theta_0) \cdot Y_k(E)\, dE,$$

où

- $f_1(E)=f_{fiss}(E) + \alpha f_{epi}(E)$, et
- $f_2(E, \theta) = f_{mxw}(E, \theta)$,

$f_{fiss}(E)$ étant une composante de fission du flux de neutrons, $f_{epi}(E)$ étant une composante épithermique du flux de neutrons, $f_{mxw}(E, \theta)$ étant une composante maxwellienne du flux de neutrons et $\alpha$ étant un coefficient de proportionnalité entre la composante épithermique du flux de neutrons et la composante de fission du flux de neutrons, et où

- $Y_k(E)$ est une fonction de réponse qui caractérise le résultat intégral de rang k.

Selon une caractéristique particulière de l'invention, la fonction de réponse **$Y_k(E)$** est une fonction d'identification d'une bande d'énergie d'intérêt $[E_a, E_b]$ qui coïncide avec l'intervalle $[E_{min}, E_{max}]$ ou qui est comprise dans l'intervalle $[E_{min}, E_{max}]$ telle que :

$$Y_k(E) = 1 \quad \text{si} \quad E_a < E < E_b,$$

et

$$Y_k(E) = 0$$

sinon

de telle sorte que $R_k(t_n)$ est le flux des neutrons dont l'énergie est comprise entre $E_a$ et $E_b$, à savoir :

$$R_k(t_n) = \int_{E_a}^{E_b} \varphi(t_n, E)dE \ .$$

Selon une autre caractéristique particulière de l'invention, la fonction de réponse $Y_k(E)$ est une section efficace macroscopique de réaction $\Sigma_r(E)$ telle que :

$$\Sigma_r(E) = \sum_i N_i' \cdot \sigma_i^r(E),$$

où

$N_i'$ est un nombre d'atomes d'un isotope i présent dans un milieu et $\sigma_i^r(E)$ est une section efficace microscopique de l'isotope i vis-à-vis d'une réaction r dans le milieu, de telle sorte que $R_k(t_n)$ est un taux de la réaction r dans le milieu, à savoir :

$$R_k(t_n) = \int_{E_{min}}^{E_{max}} \varphi(t_n, E) \Sigma_r(E)dE$$

la réaction r étant, par exemple, une réaction de fission ou de capture ou de diffusion ou d'endommagement.

Selon une caractéristique supplémentaire du dispositif de mesure de l'invention, le détecteur de neutrons rapides et le détecteur de neutrons thermiques étant des chambres à fission, les sensibilités évolutives $I_{11}(t_n)$, $I_{12}(t_n)$, $I_{21}(t_n)$ et $I_{22}(t_n)$ s'écrivent respectivement :

$$I_{11}(t_n) = \sum_i N_i(t_n) \int_{E_{min}}^{E_{max}} f_1(E)\, \sigma_i^f(E)\, dE$$

$$I_{12}(t_n) = \sum_i N_i(t_n) \int_{E_{min}}^{E_{max}} f_2(E,\theta)\, \sigma_i^f(E)\, dE$$

où $N_i(t_n)$ est la composition isotopique à l'instant $t_n$ d'un isotope i du matériau apte à détecter principalement des neutrons rapides et $\sigma_i^f(E)$ est la section efficace de l'isotope i ; et

$$I_{21}(t_n) = \sum_j N_j(t_n) \int_{E_{min}}^{E_{max}} f_1(E)\, \sigma_j^f(E)\, dE$$

$$I_{22}(t_n) = \sum_j N_j(t_n) \int_{E_{min}}^{E_{max}} f_2(E,\theta)\, \sigma_j^f(E)\, dE$$

où $N_j(t_n)$ est la composition isotopique à l'instant $t_n$ d'un isotope j du matériau apte à détecter principalement des neutrons thermiques et $\sigma_j^f(E)$ est la section efficace de l'isotope j.

Selon une caractéristique supplémentaire de l'invention, le détecteur de neutrons thermiques est une chambre à fission contenant de l'Uranium U235.

Selon une autre caractéristique supplémentaire de l'invention, le détecteur de neutrons rapides étant une chambre à fission et le détecteur de neutrons thermiques étant un collectron, les sensibilités évolutives $I_{11}(t_n)$, $I_{12}(t_n)$, $I_{21}(t_n)$ et $I_{22}(t_n)$ s'écrivent, respectivement :

$$I_{11}(t_n) = \sum_i N_i(t_n) \int_{E_{min}}^{E_{max}} f_1(E)\, \sigma_i^f(E)\, dE \ ,$$

et

$$I_{12}(t_n) = \sum_i N_i(t_n) \int_{E_{min}}^{E_{max}} f_2(E,\theta)\, \sigma_i^f(E)\, dE$$

où $N_i(t_n)$ est la composition isotopique à l'instant $t_n$ d'un isotope i du matériau apte à détecter principalement des neutrons rapides et $\sigma_j^f(E)$ est la section efficace de l'isotope i ; et

$$I_{21}(t_n) = \bigcup \left[ \Psi(t_n) \right] \int_{E_{min}}^{E_{max}} f_1(E)\, s_{Rh}(E)\, dE$$

$$I_{22}(t_n) = \bigcup \left[ \Psi(t_n) \right] \int_{E_{min}}^{E_{max}} f_2(E,\theta)\, s_{Rh}(E)\, dE$$

où U [$\psi(t_n)$] est une fonction d'usure du collectron tabulée en fonction de la fluence thermique à l'instant $t_n$ $\psi(t_n)$ du matériau apte à détecter principalement des neutrons thermiques et $S_{Rh}(E)$ est la sensibilité du collectron.

Selon une caractéristique supplémentaire de l'invention, le détecteur de neutrons thermiques est un collectron au Rhodium ou au Vanadium ou à l'Argent.

Selon une autre caractéristique supplémentaire de l'invention, le détecteur de neutrons rapides est une chambre à fission avec un dépôt fissile à seuil, par exemple une chambre à fission contenant du plutonium Pu242 pur à au moins 99,5%.

Selon une autre caractéristique supplémentaire de l'invention, la chambre à fission contenant du plutonium Pu242 pur à au moins 99,5% comprend :

* une enceinte apte à contenir un gaz de détection sous pression et dont les parois laissent passer les neutrons,
* une première et une seconde électrode, isolées électriquement l'une de l'autre, entre lesquelles une tension peut être appliquée,
* une matière fissile, comportant du plutonium 242 pur à au moins 99,5 % atomique, disposée sur l'une au moins des deux électrodes, et
* un gaz de détection, inclus dans l'enceinte sous pression, ionisable par des produits de fissions.

Selon une caractéristique supplémentaire de l'invention, le premier circuit électronique comprend un processeur numérique de calcul de variance qui délivre le signal numérique VR($t_n$) sous la forme d'une variance numérique du signal délivré par le détecteur de neutrons rapides.

Selon une autre caractéristique supplémentaire de l'invention, le second circuit électronique comprend un processeur numérique de calcul de variance qui délivre le signal numérique VT($t_n$) sous la forme d'une variance numérique du signal délivré par le détecteur de neutrons thermiques.

Selon une autre caractéristique supplémentaire de l'invention, le second circuit électronique est un circuit numérique de conversion courant-tension.

De façon préférentielle, le dispositif de mesure de l'invention rejette la composante du signal due au rayonnement gamma. Des essais réalisés en réacteur d'irradiation montrent en effet que le rayonnement gamma peut être responsable de plus de la moitié du courant moyen produit par une chambre à fission à seuil. Il est recommandé, dans ce cas, d'exploiter la chambre à fission en mode dit de « fluctuation » ou de « Campbell ». Cela consiste à s'intéresser à la variance du courant produit par la chambre à fission plutôt qu'à sa moyenne. La contribution du rayonnement gamma peut alors être négligée car cette contribution ne représente que quelques pourcents, tout au plus, de la variance.

Dans le cadre du mode de réalisation préférentiel de l'invention selon lequel la contribution du rayonnement gamma est rendue négligeable, un dispositif de mesure particulièrement avantageux de l'invention comprend, par exemple, les éléments essentiels suivants:

- Un détecteur neutronique sensible principalement aux neutrons rapides tel que, par exemple, une chambre à fission au plutonium Pu242 contenant de l'argon additionné de 4% d'azote ;

- une électronique de traitement permettant d'exploiter en mode fluctuation le signal délivré par la chambre à fission au plutonium Pu242 ;

- une liaison par câble compatible d'une utilisation en mode fluctuation et qui relie la chambre à fission au plutonium Pu242 à l'électronique de traitement qui exploite le signal délivré par la chambre à fission, (l'impédance caractéristique du câble est alors adaptée à l'impédance d'entrée de l'électronique de traitement) ;

- un détecteur neutronique sensible principalement aux neutrons thermiques tel que, par exemple, un collectron (SPND pour « Self Powered Neutron Detector » en Anglais) ou une chambre à fission à l'uranium U235 ;

- des codes de calcul (code d'évolution CE et code de calcul PMM (PMM pour « Processus de Modélisation des Mesures ») ; et

- un calculateur.

Brève description des figures

D'autres caractéristiques et avantages de l'invention apparaîtront à la lecture d'un mode de réalisation préférentiel fait en référence aux figures jointes parmi lesquelles :

- les figures 1A-1B représentent deux exemples de chambre à fission susceptibles d'être utilisées pour réaliser un dispositif de mesure conforme à l'invention ;
- la figure 2 représente un dispositif apte à déposer de la matière fissile dans les chambres à fission représentées sur les figures 1A et 1B ;
- la figure 3 représente un schéma de principe de dispositif de mesure conforme à l'invention ;
- la figure 4 représente un diagramme temporel qui illustre le fonctionnement du dispositif de mesure de l'invention de la figure 3 ;
- la figure 5 représente un schéma de principe d'un circuit particulier qui participe au dispositif de mesure de l'invention ;
- la figure 6 illustre la contribution au signal de mesure issu d'une chambre à fission au plutonium Pu242 des différents isotopes formés par transmutations successives (captures thermiques) ;

Sur toutes les figures, les mêmes repères désignent les mêmes éléments.

Exposé détaillé de modes de réalisation particuliers de l'invention

Les figures 1A, 1B et 2 ont été décrites précédemment. Il est donc inutile d'y revenir.

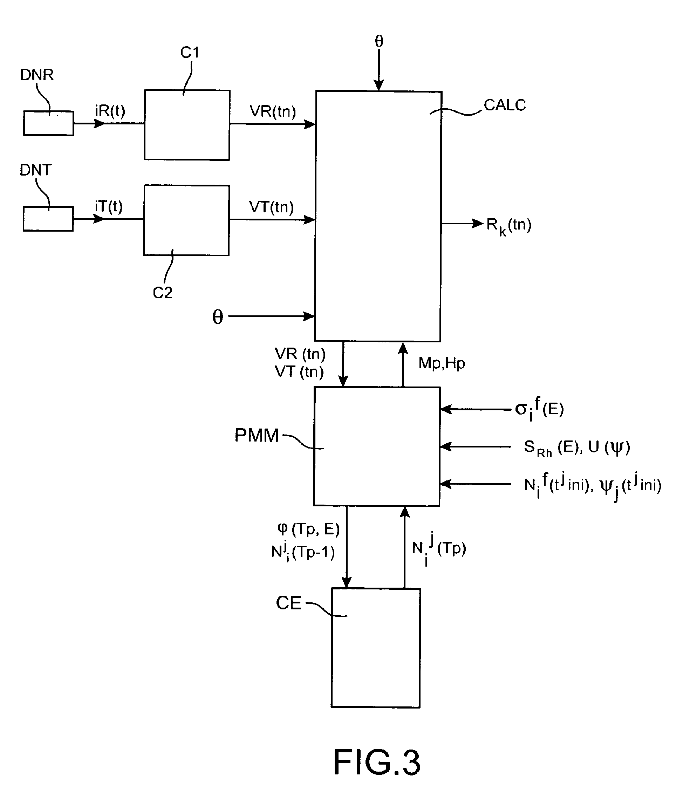

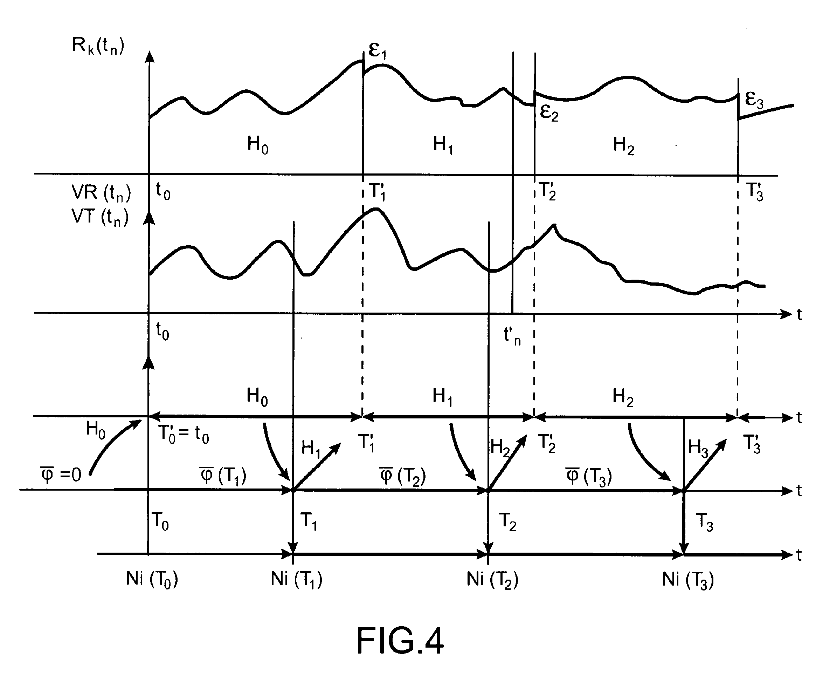

La figure 3 représente un schéma de principe de dispositif de mesure en ligne de flux de neutrons rapides et épithermiques conforme à l'invention et la figure 4 rassemble des diagrammes temporels utiles à la compréhension du fonctionnement du dispositif de mesure de l'invention représenté en figure 3.

Le dispositif comprend un détecteur DNR pour la mesure de neutrons rapides, un premier circuit électronique C1 de conditionnement et de traitement du signal issu du détecteur DNR, un détecteur DNT pour la mesure de neutrons thermiques, un second circuit électronique C2 de conditionnement et de traitement du signal issu du détecteur DNT, un code d'évolution CE, un code de calcul PMM et un calculateur CALC.

Le détecteur DNR délivre un courant $iR(t)$ et le détecteur DNT délivre un courant $iT(t)$. Les courants $iR(t)$ et $iT(t)$ sont transmis, respectivement, au circuit de conditionnement et de traitement C1 et au second circuit de conditionnement et de traitement C2 qui délivrent, respectivement, un signal numérique $VR(t_n)$ et un signal numérique $VT(t_n)$ à des instants discrets $t_n$. Comme cela apparaîtra ci-dessous, le signal numérique $VR(t_n)$ est, préférentiellement, la variance numérique du courant $iR(t)$. L'invention concerne toutefois des signaux numériques autres que la variance du courant, comme, par exemple, la valeur moyenne du courant. Les signaux numériques $VR(t_n)$ et $VT(t_n)$ sont transmis au calculateur CALC.

Le calculateur CALC calcule, à chaque instant $t_n$, au moins un résultat intégral $R_k(t_n)$ (k=1, 2, ..., $N_R$) sur un intervalle d'énergie choisi [$E_{min}$, $E_{max}$] à partir des signaux numériques $VR(t_n)$ et $VT(t_n)$ et de données délivrées par le code d'évolution CE et le code de calcul PMM. L'indice k est un indice courant variant de 1 à $N_R$, $N_R$ représentant un nombre maximal de résultats intégraux calculés au même instant $t_n$.

Le calcul des résultats $R_k(t_n)$ va maintenant être décrit.

A chaque instant $t_n$, le calculateur CALC reçoit les signaux de mesure $VR(t_n)$ et $VT(t_n)$ et effectue les calculs suivants :

1) Calcul d'une composante de flux de neutrons rapides et épithermiques $\varphi_1(t_n)$ et d'une composante de flux de neutrons thermiques $\varphi_2(t_n)$ telles que :

$$\varphi_1(t_n) = h_{11} \cdot VR(t_n) + h_{12} \cdot VT(t_n)$$

$$\varphi_2(t_n) = h_{21} \cdot VR(t_n) + h_{22} \cdot VT(t_n)$$

2) Calcul d'au moins un résultat $R_k(t_n) = \int_{E_{min}}^{E_{max}} \varphi(t_n, E) \cdot Y_k(E)dE$ à l'aide de l'équation :

$$R_k(t_n) = m_{k1} \cdot \varphi_1(t_n) + m_{k2}(\theta) \cdot \varphi_2(t_n)$$

Les grandeurs $m_{k1}$ et $m_{k2}$ étant données par les équations respectives :

$$m_{k1} = \int_{E_{min}}^{E_{max}} f_1(E) \cdot Y_k(E) \, dE \ ,$$

$$m_{k2} = \int_{E_{min}}^{E_{max}} f_2(E, \theta_0) \cdot Y_k(E) \, dE$$

où $Y_k(E)$ est une fonction de réponse définie sur le support énergétique $[E_{min}, E_{max}]$ et qui caractérise le résultat intégral $R_k(t_n)$.

A titre d'exemple non limitatif, pour le calcul d'un flux de neutrons rapides, la fonction de réponse $Y_k(E)$ correspond à un support énergétique $[E_s, E_{max}]$, l'énergie $E_s$ étant une valeur de seuil au-delà de laquelle les neutrons sont considérés comme étant des neutrons rapides. La valeur de seuil $E_s$ peut être égale, par exemple, à 100keV ou 1Mev. Il vient :

$$Y_k(E) \ = \ 1 \ pour \ E \ > \ E_s,$$

et

$$Y_k(E) \ = \ 0 \ pour \ E \ \leq \ E_s$$

Les deux fonctions $f_1(E)$ et $f_2(E, \theta)$ sont données par les équations respectives :

$$f_1(E) = f_{fiss}(E) + \alpha \cdot f_{epi}(E)$$

$$f_2(E, \theta) = f_{mxw}(E, \theta)$$

où $f_{fiss}(E)$, $f_{epi}(E)$ et $f_{mxw}(E, \theta)$ sont, respectivement, la composante de fission du flux de neutrons, la composante épithermique du flux de neutrons et la composante maxwellienne du flux de neutrons. Les composantes $f_{fiss}(E)$, $f_{epi}(E)$ et $f_{mxw}(E, \theta)$ sont des grandeurs connues en soi. Le coefficient $\alpha$ est un coefficient de proportionnalité connu entre la composante épithermique et la composante de fission.

Comme cela a été mentionné précédemment, l'invention concerne des fonctions de réponse $Y_k(E)$ autres que la fonction de réponse définie ci-dessus. La fonction de réponse $Y_k(E)$ peut ainsi être une fonction d'identification d'une bande d'énergie d'intérêt $[E_a, E_b]$ comprise dans l'intervalle $[E_{min}, E_{max}]$ ou identique à l'intervalle $[E_{min}, E_{max}]$. Il vient alors :

$$Y_k(E) = 1 \ si \ E_a < E < E_b$$

et

$$Y_k(E) = 0$$

sinon.

La fonction de réponse peut également être une section efficace macroscopique de réaction $\Sigma_r(E)$ telle que :

$$\Sigma_{r}(E) \;=\; \sum_{i} N_{i}' \;\cdot\; \sigma_{i}^{r}(E)\,,$$

où

$N_{i}'$ est un nombre d'atomes d'un isotope i présent dans un milieu et $\sigma_{i}^{r}(E)$ est une section efficace microscopique de l'isotope i vis-à-vis d'une réaction r dans le milieu, de telle sorte que $R_{k}(t_{n})$ est un taux de la réaction r dans le milieu.

Avantageusement, l'évolution sous flux de la grandeur $N_{i}'$ peut être calculée à l'aide d'un code d'évolution, par exemple le code d'évolution CE qui sert au calcul des compositions isotopiques des matériaux détecteurs des chambres à fission, en utilisant le flux $\varphi\,(t_{n}, E)$ déterminé par le système de mesure.

Dans le cas général où un nombre $N_{R}$ de calculs de flux sont effectués simultanément au même instant $t_{n}$, les calculs précédents s'écrivent sous une forme matricielle. En omettant la variable temporelle, il vient alors :

$$\begin{pmatrix} R_{1} \\ \ldots \\ R_{N_{R}} \end{pmatrix} \;=\; M \;\cdot\; H \;\cdot\; \begin{pmatrix} VR \\ VT \end{pmatrix}$$

$$M = \begin{pmatrix} m_{11} & m_{12} \\ \ldots & \ldots \\ m_{N_{R}1} & m_{N_{R}2} \end{pmatrix} \quad \text{et} \quad H = \begin{pmatrix} h_{11} & h_{12} \\ h_{21} & h_{22} \end{pmatrix}$$

Les matrices M et H sont tout d'abord calculées par le PMM lors d'une phase d'initialisation, puis sont périodiquement mises à jour par le PMM, à des instants discrets $T_{p}'$ comme cela est précisé plus loin.

On note $M_{0}$ et $H_{0}$ les matrices M et H initiales. On note $M_{p}$ et $H_{p}$ les matrices M et H entre les instants de mise à jour $T_{p}'$ et $T_{p+1}'$.

La fonction du PMM est d'élaborer les matrices d'interprétation des mesures M et H sur la base de modèles physiques du flux neutronique et des détecteurs.

1) PHASE D'INITIALISATION

Avant l'instant $t_{0}$ de la première mesure, le PMM réalise les opérations suivantes :

1.1) Calcul de la matrice M

On calcule $m_{k1}$ et $m_{k2}$ grâce à un algorithme d'intégration numérique. Il vient :

$$m_{k1} = \int_{E_{min}}^{E_{max}} f_{1}(E) \cdot Y_{k}(E)\,dE\,, \qquad k = 1,\ldots, N_{R}$$

$$m_{k2} = \int_{E_{min}}^{E_{max}} f_{2}(E, \theta_{0}) \cdot Y_{k}(E)\,dE\,, \qquad k = 1,\ldots, N_{R}$$

La température du modérateur $\theta_{0}$ est soit saisie par l'utilisateur (elle est alors supposée constante tout au long de l'expérience), soit mesurée au démarrage du système.

Comme cela a été précisé auparavant, les $\mathbf{Y_k(E)}$ sont des fonctions de réponse qui définissent le résultat intégral choisi. On rappelle que :

$$R_k(t_n) = \int \varphi(t_n, E) \cdot Y_k(E)\, dE$$

Comme cela a été mentionné précédemment, les deux fonctions $f_1(E)$ et $f_2(E, \theta)$ sont données par :

$$f_1(E) = f_{fiss}(E) + \alpha \cdot f_{epi}(E)$$

$$f_2(E, \theta) = f_{mxw}(E, \theta)\ ,$$

où les composantes de fission $f_{fiss}$, épithermique $f_{epi}$ et maxwellienne $f_{mxw}$ sont des grandeurs connues en soi.

A titre d'exemple non limitatif, la composante de fission dépend de l'énergie avec la fonction de forme suivante :

$$f_{fiss}(E) = \kappa_{fiss} \cdot \exp\left(-\frac{E}{a}\right) \cdot \sinh\left(\sqrt{bE}\right),$$

où les paramètres a et b dépendent du type de combustible utilisé dans le réacteur.

Pour la composante épithermique, il vient, par exemple :

$$f_{epi}(E) = \begin{cases} \kappa_{epi} \cdot \dfrac{E^2 - E_0^2}{E \cdot (E_1^2 - E_0^2)} & \text{si} \quad E_0 \le E \le E_1 \\[3mm] \kappa_{epi} \cdot \dfrac{1}{E} & \text{si} \quad E_1 \le E \le E_2 \\[3mm] \kappa_{epi} \cdot \dfrac{E^2 - E_3^2}{E \cdot (E_2^2 - E_3^2)} & \text{si} \quad E_2 \le E \le E_3 \\[3mm] 0 & \text{sinon} \end{cases}$$

avec, à titre d'exemple non limitatif :

$$E_0 = 0\,\text{eV} \quad ; \quad E_1 = 0.2\,\text{eV} \quad ; \quad E_2 = 0.25\,\text{MeV} \quad ; \quad E_3 = 1\,\text{MeV}$$

Enfin, la composante maxwellienne s'écrit, par exemple:

$$f_{mxw}(E, \theta) = \left(\frac{1}{K\theta}\right)^2 \cdot E \cdot \exp\left(-\frac{E}{K\theta}\right),$$

avec **K = 8.617343×10⁻⁵ eV/K** (K est la constante de Boltzmann divisée par la charge de l'électron).

Les coefficients de normalisation $K_{fiss}$ et $K_{epi}$ sont tels que : $\displaystyle\int_0^{\infty} f_{fiss}(E)\, dE = \int_0^{\infty} f_{epi}(E)\, dE = 1$ .

1.2) Calcul de $H_0$

1.2.1 Cas où les détecteurs DNR et DNT sont des chambres à fission :

Soit une chambre à fission repérée par l'indice j :

- j=1 correspond à la chambre à fission pour la détection des neutrons rapides (par exemple, une chambre au Pu242), et
- j=2 correspond à la chambre à fission pour la détection des neutrons thermiques (par exemple, une chambre à fission à l'U235).

Étape 1 : calcul de la composition isotopique

Les données d'entrée sont constituées par la composition isotopique initiale $N_i^j(t_{ini}^j)$ du dépôt de la chambre à fission (nombre d'atomes de chaque isotope i). Cette composition isotopique donnée à l'instant $t_{ini}^j < t_0$ résulte d'analyses chimiques réalisées par le fabricant de la chambre à fission ou, avantageusement, résultent de calculs effectués par le PMM lors d'une précédente irradiation de la chambre à fission.
Avec ces données d'entrée, le PMM lance un calcul d'évolution à flux neutronique nul grâce au code d'évolution CE qui s'appuie, en outre, sur des données nucléaires (sections efficaces, constantes de décroissance radioactive, etc.) issues de bibliothèques normalisées (type JEF, ENDF, etc.).
Le résultat de ce calcul d'évolution qui se réduit à un calcul de décroissance (flux nul) est la composition isotopique du dépôt à $t_0$ : $N_i^j(t_0)$ .

Étape 2 Calcul des sensibilités rapide et thermique de la chambre à fission

On rappelle que les sensibilités $I_{ji}$ d'une chambre à fission se définissent comme le rapport entre le taux de fission $RD_j$ et la composante de flux considérée, soit :

$$RD_j = I_{j1} \cdot \varphi_1 + I_{j2} \cdot \varphi_2$$

Le PMM calcule alors les coefficients de sensibilités rapide et thermique de la chambre à fission :

$$I_{j1} = \sum_i N_i^j(t_0) \cdot \int_{E_{min}}^{E_{max}} f_1(E) \cdot \sigma_i^f(E)\, dE$$

$$I_{j2} = \sum_i N_i^j(t_0) \cdot \int_{E_{min}}^{E_{max}} f_2(E, \theta_0) \cdot \sigma_i^f(E)\, dE$$

La température du modérateur $\theta_0$ est soit saisie par l'utilisateur (elle est alors supposée constante tout au long de l'expérience), soit mesurée au démarrage du système.

Les données d'entrées $\sigma_i^f(E)$ définies sur le support énergétique $[E_{min}, E_{max}]$ désignent les sections efficaces de fission des isotopes i. Elles sont généralement issues de bibliothèques de données nucléaires normalisées (type JEF, ENDF, etc.).

1.2.2 Cas où le détecteur DNR est une chambre à fission et où le détecteur DNT est un collectron (SPND)

La différence entre un collectron et une chambre à fission tient au fait que les phénomènes d'autoprotection et d'autoabsorption dans le matériau détecteur massif d'un collectron ne peuvent pas être négligés comme on le fait pour une chambre à fission dont le dépôt est extrêmement fin (masse surfacique inférieure à 1 mg/cm$^2$). Il s'ensuit que les calculs d'évolution sous flux sont plus complexes et ne peuvent pas être effectués en ligne. Ils sont donc réalisés à l'avance et les résultats sont tabulés sous forme d'une fonction d'usure dépendant de la fluence thermique intégrée par le collectron, comme cela sera explicité plus loin.

Soit un collectron, par exemple au rhodium (Rh), repéré par l'indice j. On rappelle que les sensibilités d'un collectron se définissent comme le rapport entre le taux de capture $RD_j$ et la composante de flux considérée, soit :

$$RD_j = I_{j1} \cdot \varphi_1 + I_{j2} \cdot \varphi_2$$

Les données d'entrée sont ici :

- $\psi_j(t_{ini}^j)$ : Fluence thermique initiale intégrée par le collectron (intégrale temporelle du flux thermique). Cette fluence donnée à l'instant $t_{ini}^j < t_0$ est nulle pour un collectron neuf. Sinon, elle résulte des calculs effectués par le PMM lors d'une précédente utilisation du collectron (irradiation) ;
- $S_{Rh}(E)$ : sensibilité du SPND, par exemple au rhodium Rh, tenant compte de la section efficace de capture, de l'autoprotection de l'émetteur et de l'autoabsorption des électrons émis (calcul effectué par un expert) ;
- $U(\psi)$ : fonction d'usure, tabulée en fonction de la fluence thermique $\psi$ (calcul effectué par un expert ou retour d'expérience expérimental).

Les calculs de $S_{Rh}$ et U sont décrits, par exemple, dans la publication mentionnée en référence bibliographique [6].

Le PMM calcule directement les sensibilités rapide et thermique du collectron à l'aide des équations:

$$I_{j1} = U\left(\psi_j(t_{ini}^j)\right) \cdot \int_{E_{min}}^{E_{max}} f_1(E) \cdot S_{Rh}(E)\, dE$$

$$I_{j2} = U\left(\psi_j(t_{ini}^j)\right) \cdot \int_{E_{min}}^{E_{max}} f_2(E, \theta) \cdot S_{Rh}(E)\, dE$$

La température du modérateur $\theta$ est soit saisie par l'utilisateur (et supposée constante tout au long de l'expérience), soit mesurée au démarrage du système.

### 1.2.3) Calcul de $H_0$

Le PMM procède à une inversion de matrice 2x2 :

$$H_0 = \begin{pmatrix} K_1 \cdot I_{11} & K_1 \cdot I_{12} \\ K_2 \cdot I_{21} & K_1 \cdot I_{22} \end{pmatrix}^{-1}$$

Le coefficient d'étalonnage $K_j$ est le rapport entre la grandeur $V_j$ transmise au calculateur et le taux d'interaction (fission ou capture) $RD_j$ dans le détecteur j ($V_j = K_j \cdot RD_j$).

### 2) MISE A JOUR DES MATRICES M ET H

### 2.1) Synchronisation temporelle du calculateur CALC et du PMM

La synchronisation temporelle du calculateur CALC et du PMM est illustrée sur la figure 4.

Le PMM lance un calcul de mise à jour de M et H à des instants notés $T_p$ (cf. $T_0$, $T_1$, $T_2$, $T_3$, ... sur la figure 4).

Le calcul terminé, le PMM transmet les nouvelles matrices notées $M_p$ et $H_p$ au calculateur afin qu'il les utilise en lieu et place des matrices précédentes notées $\mathbf{M_{p-1}}$ et $\mathbf{H_{p-1}}$.

Le calculateur prend en compte $\mathbf{M_p}$ et $\mathbf{H_p}$ à l'instant $T'_p > T_p$. La durée $(T'_p - T_p)$ peut varier, il faut simplement choisir les instants $\mathbf{T_p}$ de telle sorte que $T'_p < T_{p+1}$.

En pratique, on choisit un $\Delta T_p = T_p - T_{p-1} = Q \cdot dt$ constant et le plus faible possible, en fonction des performances de calcul permises par le processeur en charge du PMM. D'autres critères de cadencement du PMM sont envisageables, mais ils ne présentent pas d'intérêt particulier par rapport à celui que nous avons choisi.

Remarque : si les mesures sont constantes au voisinage de l'instant $T'_p$, le changement de matrices d'interprétation introduit cependant un léger saut $\varepsilon_p$ (cf. $\varepsilon_1$, $\varepsilon_2$, $\varepsilon_3$ sur la figure 4) dans les résultats :

$$\begin{pmatrix} R_1 \\ \cdots \\ R_{N_F} \end{pmatrix} = M \cdot H \cdot \begin{pmatrix} VR \\ VT \end{pmatrix}$$

Le saut $\varepsilon_p$ correspond en fait au rattrapage de l'erreur de sensibilité qui s'est accrue (lentement) depuis le dernier calcul PMM à $T_{p-1}$. Cette erreur restera négligeable si $(T_p-T_{p-1})$ est suffisamment court (en fait, tant que la fluence intégrée par les détecteurs dans cet intervalle de temps est suffisamment faible).

2.2) Calcul des mesures moyennes

Le PMM utilise les mesures **VR** et **VT** pour mettre à jour les matrices d'interprétation M et H utilisées par le calculateur. Si la température du modérateur $\theta$ est mesurée, elle est également utilisée dans ce processus, sinon le PMM utilise la température saisie par l'utilisateur et supposée constante tout au long de l'irradiation des détecteurs.

Entre les instants $\mathbf{T_{p-1}}$ et $\mathbf{T_p}$, le PMM accumule les mesures VR, VT et éventuellement $\theta$ qui lui sont transmises par le calculateur à chaque instant $t_n$, dans le but d'en calculer les valeurs moyennes :

$$\overline{VR}(T_p) = \frac{1}{N_p} \sum_{t_n=T_{p-1}}^{T_p} VR(t_n)$$

$$\overline{VT}(T_p) = \frac{1}{N_p} \sum_{t_n=T_{p-1}}^{T_p} VT(t_n)$$

$$\overline{\theta}(T_p) = \frac{1}{N_p} \sum_{t_n=T_{p-1}}^{T_p} \theta(t_n) \text{ si } \theta \text{ est mesurée,}$$

$$\overline{\theta}(T_p) = \theta \text{ si } \theta \text{ est saisie.}$$

$N_p$ est le nombre de mesures transmises au PMM entre les instants $T_{p-1}$ et $T_p$ :

$$N_p \approx (T_p - T_{p-1})/dt$$

2.3) Calcul du flux neutronique moyen à l'instant $T_p$

Les mesures moyennes sont interprétées par le PMM comme le fait le calculateur en utilisant la matrice H. On calcule tout d'abord :

$$\begin{pmatrix} \overline{\varphi}_1(T_p) \\ \overline{\varphi}_1(T_p) \end{pmatrix} = H_{p-1} \cdot \begin{pmatrix} \overline{VR}(T_p) \\ \overline{VT}(T_p) \end{pmatrix}$$

puis
le flux neutronique moyen par :

$$\overline{\varphi}(T_p, E) = \overline{\varphi}_1(T_p) \cdot f_1(E) + \overline{\varphi}_2(T_p) \cdot f_2(E, \overline{\theta}(T_p))$$

Remarque 1 : le flux moyen sert à calculer $\mathbf{H}_p$. Le PMM utilise donc $H_{p-1}$ pour calculer $\mathbf{H}_p$, il s'agit donc d'un algorithme itératif.
Remarque 2 : il est légitime d'utiliser le flux moyen dans les étapes qui vont suivre, car on suppose que l'intervalle de temps entre deux calculs PMM est aussi court que possible.

2.4) Mise à jour de la matrice **M**

Il n'y a rien à faire si la température $\theta$ est saisie par l'utilisateur et supposée constante : $M_p = M_0$.
Si la température $\theta$ est mesurée, seule la seconde colonne de M doit être mise à jour. On procède comme pour $M_0$ en remplaçant $\theta_0$ par $\overline{\theta}(T_p)$ :

$$m_{k2} = \int_{E_{min}}^{E_{max}} f_2\left(E, \overline{\theta}(T_p)\right) \cdot Y_k(E)\, dE\ , \qquad k = 1,..., N_R$$

2.5) Mise à jour de la matrice H

Le calcul de $\mathbf{H}_p$ diffère de celui de $\mathbf{H}_0$ par le fait que le flux neutronique n'est plus nul et que les calculs d'évolution doivent tenir compte de l'interaction des neutrons avec les matériaux détecteurs.

2.5.1 Calcul de la sensibilité des chambres à fission

Soit une chambre à fission repérée par l'indice j (j=1 pour la chambre à fission DNR et j=2 pour la chambre à fission DNT).

Étape 1 : calcul de la composition isotopique

Les données d'entrée sont :

- La composition isotopique $N_i^j(T_{p-1})$ du dépôt de la chambre à fission (nombre d'atomes de chaque isotope i) à l'instant $T_{p-1}$, $N_i^j(T_0) = N_i^j(t_0)$ étant calculé par le PMM en phase d'initialisation, et
- Le flux neutronique moyen $\overline{\varphi}(E, T_p)$.

Avec ces données d'entrée, le PMM lance un calcul d'évolution sous flux neutronique grâce au code d'évolution CE qui s'appuie, en outre, sur des données nucléaires DN (sections efficaces, constantes de décroissance radioactive, etc.) issues de bibliothèques normalisées (type JEF, ENDF, etc.).

Le résultat de ce calcul d'évolution est la composition isotopique du dépôt à l'instant $T_p$ : $N_i^j(T_p)$ .

Étape 2 : Calcul des sensibilités rapide et thermique de la chambre à fission

On rappelle que les sensibilités $I_{ji}$ d'une chambre à fission se définissent comme le rapport entre le taux de fission et la composante de flux considérée, soit :

$$RD_j = I_{j1} \cdot \varphi_1 + I_{j2} \cdot \varphi_2$$

Le PMM peut calcule alors les coefficients de sensibilités rapide et thermique de la chambre à fission à l'instant $T_p$ :

$$I_{j1}(T_p) = \sum_i N_i^j(T_p) \cdot \int_{E_{min}}^{E_{max}} f_1(E) \cdot \sigma_i^f(E)\, dE$$

$$I_{j2}(T_p) = \sum_i N_i^j(T_p) \cdot \int_{E_{min}}^{E_{max}} f_2\left(E, \overline{\theta}(T_p)\right) \cdot \sigma_i^f(E)\, dE$$

Les données d'entrées $\sigma_i^f(E)$ définies sur le support énergétique $[E_{min}, E_{max}]$ désignent les sections efficaces de fission des isotopes i. Elles sont issues de bibliothèques de données nucléaires normalisées (type JEF, ENDF, etc.).

2.5.2 Calcul de la sensibilité du collectron (cas où le détecteur DNT est un collectron)

Soit un collectron, par exemple au rhodium (Rh), repéré par l'indice j.
On procède en deux étapes.

Étape 1 : calcul de la fluence thermique intégrée par le collectron

On procède de manière itérative :

$$\psi_j(T_p) = \psi_j(T_{p-1}) + \overline{\varphi}_{SPND}(T_p) \cdot (T_p - T_{p-1}) \ ,$$

et

$$\psi_j(T_0) = \psi_j(t_0)$$

où $\overline{\varphi}_{SPND}(T_p)$ est le flux thermique déduit de $\overline{\varphi}(E, T_p)$ suivant la même convention que celle utilisée lors des calculs des fonctions $S_{Rh}(E)$ et $U(\psi)$.
En pratique, un expert qui a réalisé les calculs des fonctions $S_{Rh}(E)$ et $U(\psi)$ a défini deux paramètres $\alpha_1$ et $\alpha_2$ tels que :

$$\overline{\varphi}_{SPND}(T_p) = \alpha_1 \cdot \overline{\varphi}_1(T_p) + \alpha_2 \cdot \overline{\varphi}_2(T_p)$$

<u>Étape 2 : Calcul des sensibilités rapide et thermique du collectron</u>

Les données d'entrée sont :

- $\psi_j(T_p)$ : la fluence thermique intégrée par le collectron (intégrale temporelle du flux thermique) ;
- $S_{Rh}(E)$ : la sensibilité du collectron, par exemple au rhodium (Rh), tenant compte de la section efficace de capture, de l'autoprotection de l'émetteur et de l'autoabsorption des électrons émis (calcul effectué par un expert).
- $U(\psi)$ : la fonction d'usure, tabulée en fonction de la fluence thermique $\psi$ (calcul effectué par un expert ou retour d'expérience expérimental).

Le PMM calcule directement les sensibilités rapide et thermique du collectron à l'aide des équations :

$$I_{j1}(T_p) = U\left(\psi_j(T_p)\right) \cdot \int_{E_{min}}^{E_{max}} f_1(E) \cdot S_{Rh}(E)\, dE$$

$$I_{j2}(T_p) = U\left(\psi_j(T_p)\right) \cdot \int_{E_{min}}^{E_{max}} f_2\left(E, \overline{\theta}(T_p)\right) \cdot S_{Rh}(E)\, dE$$

<u>2.5.3) Calcul de_$\mathbf{H}_p$</u>

Le PMM procède à une inversion de matrice 2x2 :

$$H_p = \begin{pmatrix} K_1 \cdot I_{11}(T_p) & K_1 \cdot I_{12}(T_p) \\ K_2 \cdot I_{21}(T_p) & K_1 \cdot I_{22}(T_p) \end{pmatrix}^{-1}.$$

Le coefficient d'étalonnage $\mathbf{K}_j$ est le rapport entre la grandeur $\mathbf{V}_j$ transmise au calculateur et le taux d'interaction (fission ou capture) $RD_j$ dans le détecteur j ($V_j = K_j \cdot RD_j$).

<u>2.6) Transmission des matrices M et H</u>

Le PMM transmet les matrices $M_p$ et $H_p$ au calculateur CALC qui les substitue aux matrices d'interprétation M et H à l'instant $T_p' > T_p$.

Selon le mode de réalisation préférentiel de l'invention, le détecteur DNR est une chambre à fission ayant un dépôt fissile à seuil. Une telle chambre à fission est représentée, par exemple, sur les figures 1A et 1B. Le dépôt fissile à seuil peut être un dépôt de plutonium Pu242, comme cela a été mentionné précédemment. Le dépôt fissile à seuil peut également être un dépôt d'uranium U238 ou de neptunium Np237 ou encore de thorium Th232. Dans le cadre du mode de réalisation préférentiel de l'invention, un câble de liaison relie le détecteur DNR au circuit C1. Ce câble de liaison est utilisé pour, à la fois, polariser électriquement le détecteur et transmettre le signal délivré par la chambre à fission vers le circuit de traitement C1. La partie du câble soumise au flux neutronique doit être à isolant minéral (alumine, silice, magnésie). Le câble est préférentiellement intégré au détecteur et son diamètre extérieur est inférieur à celui du détecteur. Ce câble doit, en outre, avoir des propriétés électriques compatibles avec une exploitation de la chambre à fission en mode fluctuation, à savoir: une faible capacité linéique, une impédance caractéristique proche de l'impédance d'entrée de l'électronique (typiquement 50Ω) et une faible impédance de transfert pour garantir une forte immunité aux parasites. On utilise, à cette fin, du câble à conducteur et blindage en cuivre, avec une enveloppe en inox ou en inconel pour assurer une bonne tenue mécanique en réacteur. Le câble a, par exemple, un diamètre sensiblement compris entre 2mm et 2,2mm pour une chambre à fission de 3mm de diamètre et sensiblement égal à 1,3mm pour une chambre à fission de 1,5mm de diamètre (optimisation de l'impédance de transfert).

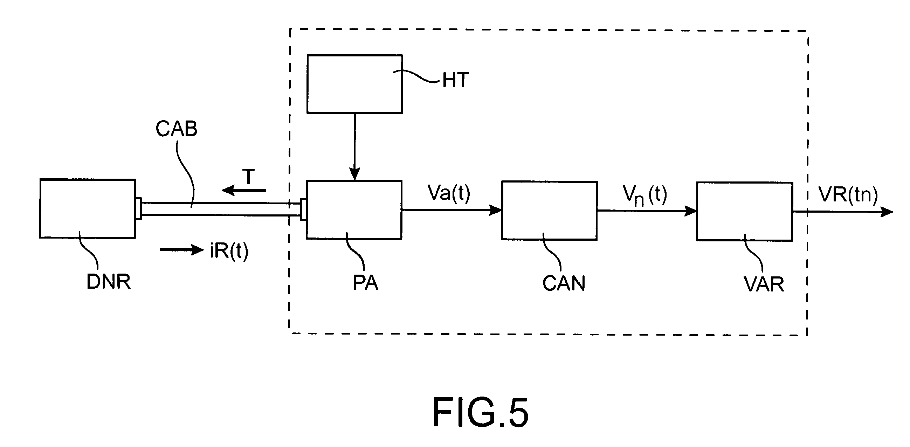

La figure 5 représente un schéma de principe qui détaille le circuit de conditionnement et de traitement C1 selon le mode de réalisation préférentiel de l'invention. Le circuit C1 comprend un préamplificateur PA, un convertisseur analogique/numérique CAN, un processeur numérique de calcul de variance VAR et un générateur de haute tension HT. Le détecteur DNR est relié au circuit C1 par un câble CAB. Le préamplificateur PA convertit le courant iR(t) qu'il reçoit, via le câble CAB, en une tension analogique Va(t) qui est transmise au convertisseur analogique/numérique CAN. La haute tension T délivrée par le générateur de haute tension HT transite, via le préamplificateur PA et le câble CAB, vers le détecteur DNR. Le convertisseur analogique/numérique CAN convertit la tension analogique Va(t) en une tension numérique $V_n(t_n)$ échantillonnée aux instants discrets $t_n = n \cdot dt$ (dt est la période d'échantillonnage, typiquement dt = 1 $\mu$s, et n est un entier représentant l'indice temporel de l'échantillon) qui est transmise au processeur numérique de calcul de variance VAR, lequel délivre la variance numérique $VR(t_n)$.

De façon préférentielle, l'électronique de traitement du signal met en oeuvre le mode fluctuation basé sur le théorème de Campbell (cf. référence [4]). Ce théorème démontre que le signal électrique produit par un empilement d'impulsions dans une chambre à fission a des propriétés statistiques intéressantes. La moyenne et la variance de ce signal sont en effet toutes deux proportionnelles au flux de neutrons incident, mais tandis que la moyenne est également proportionnelle à la charge moyenne Q créée dans le gaz pour chaque neutron détecté, la variance est quant à elle proportionnelle à cette charge élevée au carré.

De façon connue en soi, il est dit qu'une chambre à fission est exploitée en « mode courant », lorsqu'on s'intéresse à la moyenne du courant qu'elle produit. La sensibilité d'une chambre à fission en mode courant est proportionnelle à Q. La charge créée par un neutron étant généralement 100 fois plus élevée que celle produite par un photon gamma, il en ira de même des sensibilités relatives respectivement aux flux neutronique et gamma. Cette propriété fait de la chambre à fission un détecteur neutronique généralement bien adapté à la mesure des neutrons en présence d'un rayonnement gamma intense (situation typique des mesures en réacteur). Dans certaines circonstances, la réjection du rayonnement gamma en mode courant peut cependant s'avérer insuffisante : soit parce que le rayonnement gamma est très intense (en réacteur d'irradiation notamment), soit parce que la sensibilité aux neutrons est réduite (c'est le cas des chambres à fission au Pu242 dont la sensibilité aux neutrons rapides est de deux ordres de grandeur inférieure à celle des chambres à fission classiques à U235 vis-à-vis des neutrons thermiques). Le signal « mode courant » doit alors être corrigé en lui soustrayant celui produit par une chambre à fission voisine dépourvue de dépôt fissile (donc sensible exclusivement aux rayonnements gamma). Il faut alors mettre en oeuvre deux détecteurs pour accéder au flux neutronique.

Exploiter la chambre à fission en « mode fluctuation » est, dans ce cas, une alternative intéressante. La sensibilité dépendant de la quantité $Q^2$, la sensibilité au rayonnement gamma se trouvera donc environ 10 000 fois plus faible que celle observée vis-à-vis des neutrons. On peut alors obtenir, avec une seule chambre à fission, une réjection des gamma suffisamment efficace, y compris dans des circonstances assez difficiles. Avec les chambres à fission au plutonium Pu242, les inventeurs de la présente demande de brevet ont observé que, en réacteur d'irradiation, la contribution du rayonnement gamma passe d'environ 50% en mode courant à environ 0,6% en mode fluctuation. C'est la raison pour laquelle, les inventeurs de la présente demande de brevet ont choisi, préférentiellement, de développer une électronique de traitement numérique du signal pour exploiter la chambre en mode fluctuation.

Le signal électrique issu de la chambre à fission est, après amplification et conditionnement (préamplificateur PA), numérisé à l'aide du convertisseur analogique-numérique CAN. Le calcul de la variance est alors réalisé de manière numérique, à l'aide d'un circuit d'électronique numérique, par exemple de type FPGA (FPGA pour « Field Programmable Gate Array » ou Réseau Prédiffusé Programmable par l'Utilisateur) ou à l'aide d'un processeur.

Le circuit CAN échantillonne, avec une fréquence d'échantillonnage Fe=1/dt, le signal analogique Va(t) en un signal numérique $VR(t_n)$ avec $t_n = n \cdot dt$. La fréquence Fe est, par exemple, égale à 1 MHz. Le signal numérique $Vn(t_n)$ est alors traité par le processeur numérique VAR. Le processeur VAR calcule la variance numérique $VR(t_n)$ sur un horizon glissant de N échantillons correspondant à une durée $T_h$ telle que :

$$T_h = N\ dt$$

La durée $T_h$ est égale, par exemple, à 100 ms. Il vient :

$$VR(t_n) = \frac{1}{N-1} \sum_{k=0}^{N-1} Vn(t_n - k \cdot dt)^2$$

La variance numérique $VR(t_n)$ peut éventuellement être décimée (jusqu'à un facteur N) puisque sa bande passante est inférieure à celle du signal d'origine $Vn(t_n)$. La chaîne de mesure produit ainsi une valeur numérique de la variance proportionnelle au flux de neutrons incidents, par exemple toutes les 100 ms.

**EP 2 338 157 B1**

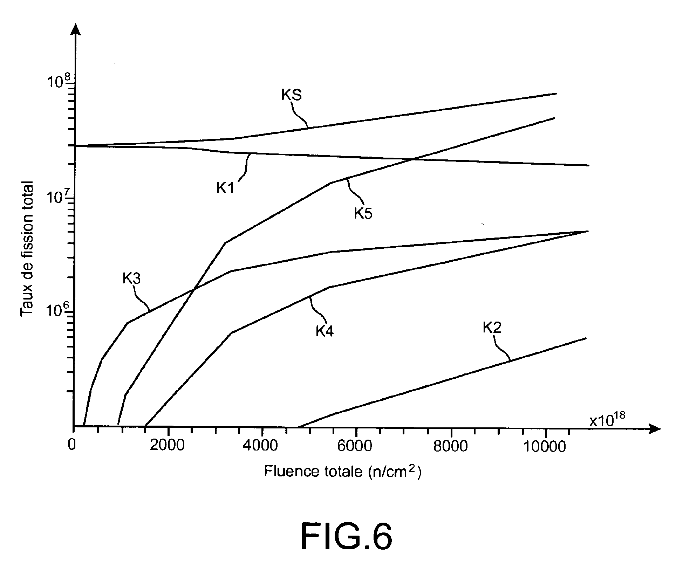

La mesure des neutrons thermiques est réalisée à l'aide d'un collectron (SPND), par exemple au rhodium, ou à l'aide d'une chambre à fission à l'uranium U235 également exploitée, de façon préférentielle, en mode fluctuation (réjection du rayonnement gamma). La mesure des neutrons thermiques sert à évaluer l'évolution de la composition isotopique du dépôt de la chambre à fission sous flux. En effet, sous l'effet d'un flux thermique intense, il se forme des isotopes fissiles par transmutations successives du plutonium Pu242, rendant la chambre à fission au plutonium Pu242 de plus en plus sensible aux neutrons thermiques. La figure 6 illustre, à titre d'exemple non limitatif pour des flux thermiques et rapides de 1E15 n/cm$^2$/s, le taux de fission total (courbe KS sur la figure 6) et la contribution au taux de fission total des différents isotopes formés par transmutations successives, à savoir le plutonium Pu242 (courbe K1 sur la figure 6), le plutonium Pu241 (courbe K2 sur la figure 6), l'américium AM243 (courbe K3 sur la figure 6), le curium CM244 (courbe K4 sur la figure 6) et le curium CM245 (courbe K5 sur la figure 6). Comme cela apparaît clairement, le plus gênant des isotopes fissiles qui apparaissent par transmutations successives est le Cm245 (courbe K5), à partir d'une fluence thermique de l'ordre de $10^{21}$n/cm$^2$.

Dans le cadre de l'invention, le circuit électronique de conditionnement et de traitement C2 (non représenté sur les figures) est avantageusement identique au circuit C1 si le détecteur DNT est une chambre à fission à U235. Si le détecteur thermique DNT est un collectron, le circuit C2 est un circuit numérique de conversion courant - tension. Cette fonction peut, par exemple, être assurée par un voltmètre digital qui mesure la chute de tension aux bornes d'une résistance (par exemple de 10 kΩ à 1%) dans laquelle circule le courant généré par le collectron.

**Références bibliographiques**

[1] D. Beretz et al. :« French PWR Vessel Surveillance Program Dosimetry Experience Feedback from More than a Hundred Capsules », Reactor Dosimetry ASTM STP 1398, West Conshohocken, PA, 2000

[2] G. Bignan et J-C. Guyard :« *Chambre à fission subminiature avec passage étanche* » brevet français, N° enregistrement 9414293, N° publication 2727526.

[3] Y. Kashchuk et al. : « Monitoring the Fast Neutron Flux Density and Fluence in a RBMK Core Using a Threshold Fission Chamber in a Screen-Absorber ». Atomic Energy, Vol. 98, 4, (2005), 249.

[4] G.F. Knoll. : « Radiation Detection and Measurement » 3rd Edition, John Wiley & Sons, 1999.

[5] A. Tsilanizara et al. DARWIN : « An evolution code system for a large range of applications ». J. Nucl. Sci. Technol. 37 (2000) 845.

[6] L. Vermeeren : « Absolute on-line in-pile measurement of neutron fluxes using self-powered neutron detectors », 5th International Topical Meeting on Research Reactor Fuel Management, Org. European Nuclear Society, Aix-la-Chapelle, Allemagne, 1-3 avril 2001.

**Revendications**

1. Dispositif de mesure en ligne d'un flux de neutrons rapides et épithermiques $\varphi_1(t_n)$ à des instants $t_n$ sur un intervalle d'énergie [$E_{min}$, $E_{max}$], comprenant:

- un détecteur de neutrons rapides (DNR) contenant un matériau apte à détecter principalement des neutrons rapides;
- un détecteur de neutrons thermiques (DNT) contenant un matériau apte à détecter principalement des neutrons thermiques;
- un premier circuit électronique (C1) qui délivre, aux instants $t_n$, un signal numérique VR($t_n$) à partir d'un signal de détection délivré par le détecteur de neutrons rapides;
- un second circuit électronique (C2) qui délivre, aux instants $t_n$, un second signal numérique VT($t_n$) à partir d'un signal de détection délivré par le détecteur de neutrons thermiques ;
- des moyens (PMM, CE) agencés pour déterminer, aux instant $t_n$, la composition isotopique du matériau détecteur de neutrons rapides et la composition isotopique du matériau détecteur de neutrons thermiques ;
- des moyens (PMM, CE) agencés pour déterminer, aux instants $t_n$, à partir desdites compositions isotopiques, la sensibilité évolutive aux neutrons rapides $I_{11}(t_n)$ du détecteur de neutrons rapides, la sensibilité évolutive aux

neutrons thermiques $I_{12}(t_n)$ du détecteur de neutrons rapides, la sensibilité évolutive aux neutrons rapides $I_{21}(t_n)$ du détecteur de neutrons thermiques et la sensibilité évolutive aux neutrons thermiques $I_{22}(t_n)$ du détecteur de neutrons thermiques,

- des moyens de calcul (CALC) agencés pour calculer le flux de neutrons rapides et épithermiques $\varphi1(t_n)$ aux instants $t_n$ et un flux de neutrons thermiques $\varphi2(t_n)$, à partir du système d'équations :

$$VR(t_n) = KR \times I_{11}(t_n) \times \varphi1(t_n) + KR \times I_{12}(t_n) \times \varphi2(t_n),$$

et

$$VT(t_n) = KT \times I_{21}(t_n) \times \varphi1(t_n) + KT \times I_{22}(t_n) \times \varphi2(t_n)$$

où KR et KT sont, respectivement, un coefficient d'étalonnage du détecteur de neutrons rapides et un coefficient d'étalonnage du détecteur de neutrons thermiques.

2. Dispositif de mesure selon la revendication 1, **caractérisé en ce qu'**il comprend, en outre, des moyens (CALC) pour calculer un flux neutronique complet $\varphi(t_n,E)$ à l'aide de l'équation :

$$\varphi(t_n, E) = \varphi_1(t_n) \cdot f_1(E) + \varphi_2(t_n) \cdot f_2(E, \theta),$$

ou

- $f_1(E) = f_{fiss}(E) + \alpha\, f_{epi}(E)$, et
- $f_2(E, \theta) = f_{mxw}(E, \theta)$,

$f_{fiss}(E)$ étant une composante de fission du flux de neutrons, $f_{epi}(E)$ étant une composante épithermique du flux de neutrons, $f_{mxw}(E, \theta)$ étant une composante maxwellienne du flux de neutrons et $\alpha$ étant un coefficient de proportionnalité entre la composante épithermique du flux de neutrons et la composante de fission du flux de neutrons.

3. Dispositif selon la revendication 1, **caractérisé en ce qu'**il comprend, en outre, des moyens (CALC) pour calculer, sur l'intervalle $[E_{min}, E_{max}]$, $N_r$ résultats intégraux aux instants $t_n$, $N_r$ étant un nombre entier supérieur ou égal à 1, un résultat intégral de rang k (k=1, 2, ..., $N_n$) étant donné par l'équation :

$$R_k(t_n) = m_{k1} \cdot \varphi_1(t_n) + m_{k2}(\theta) \cdot \varphi_2(t_n)$$

avec

$$m_{k1} = \int_{E_{min}}^{E_{max}} f_1(E) \cdot Y_k(E)\, dE\ ,$$

et

$$m_{k2} = \int_{E_{min}}^{E_{max}} f_2(E, \theta_0) \cdot Y_k(E)\, dE\ ,$$

où

- fi(E) = $f_{fiss}$(E) + $\alpha$ $f_{epi}$ (E), et
- $f_2$(E, $\theta$) = $f_{mxw}$(E, $\theta$),

$f_{fiss}$(E) étant une composante de fission du flux de neutrons, $f_{epi}$(E) étant une composante épithermique du flux de neutrons, $f_{mxw}$(E, $\theta$) étant une composante maxwellienne du flux de neutrons et $\alpha$ étant un coefficient de proportionnalité entre la composante épithermique du flux de neutrons et la composante de fission du flux de neutrons, et où

- $Y_k$(E) est une fonction de réponse qui caractérise le résultat intégral de rang k.

4. Dispositif de mesure selon la revendication 3, dans lequel la fonction de réponse $Y_k$(E) est une fonction d'identification d'une bande d'énergie d'intérêt [$E_a$, $E_b$] qui coïncide avec l'intervalle [$E_{min}$, $E_{max}$] ou qui est comprise dans l'intervalle [$E_{min}$, $E_{max}$] telle que :

$$Y_k(E) = 1 \quad si \quad E_a < E < E_b$$

et

$$Y_k(E) = 0 \quad sinon$$

de telle sorte que $R_k(t_n)$ est le flux des neutrons dont l'énergie est comprise entre $E_a$ et $E_b$, à savoir :

$$R_k(t_n) = \int_{E_a}^{E_b} \varphi(t_n, E) dE \,.$$

5. Dispositif de mesure selon la revendication 3, dans lequel la fonction de réponse $Y_k$(E) est une section efficace macroscopique de réaction $\Sigma_r$(E) telle que :

$$\Sigma_r(E) = \sum_i N'_i \cdot \sigma_i^r(E),$$

où

Ni' est un nombre d'atomes d'un isotope i présent dans un milieu et $\sigma_i^r(E)$ est une section efficace microscopique de l'isotope i vis-à-vis d'une réaction r dans le milieu, de telle sorte que $R_k(t_n)$ est un taux de la réaction r dans le milieu, à savoir :

$$R_k(t_n) = \int_{E_{min}}^{E_{max}} \varphi(t_n, E) \sum_r(E) dE$$

6. Dispositif de mesure selon la revendication 5, dans lequel la réaction r est une réaction de fission ou de capture ou de diffusion ou d'endommagement.

7. Dispositif de mesure selon l'une quelconque des revendications précédentes, dans lequel le détecteur de neutrons rapides et le détecteur de neutrons thermiques étant des chambres à fission, les sensibilités évolutives $I_{11}(t_n)$, $I_{12}(t_n)$, $I_{21}(t_n)$ et $I_{22}(t_n)$ s'écrivent respectivement :

$$I_{11}(t_n) = \sum_i N_i(t_n) \int_{E_{\min}}^{E_{\max}} f_1(E)\, \sigma_i^f(E)\, dE$$

$$I_{12}(t_n) = \sum_i N_i(t_n) \int_{E_{\min}}^{E_{\max}} f_2(E,\theta)\, \sigma_i^f(E)\, dE$$

où $N_i(t_n)$ est la composition isotopique à l'instant $t_n$ d'un isotope i du matériau apte à détecter principalement des neutrons rapides et $\sigma_i^f(E)$ est la section efficace de l'isotope i ; et

$$I_{21}(t_n) = \sum_j N_j(t_n) \int_{E_{\min}}^{E_{\max}} f_1(E)\, \sigma_j^f(E)\, dE$$

$$I_{22}(t_n) = \sum_j N_j(t_n) \int_{E_{\min}}^{E_{\max}} f_2(E,\theta)\, \sigma_j^f(E)\, dE$$

où $N_j(t_n)$ est la composition isotopique à l'instant $t_n$ d'un isotope j du matériau apte à détecter principalement des neutrons thermiques et $\sigma_j^f(E)$ est la section efficace de l'isotope j.

8. Dispositif de mesure selon la revendication 7, dans lequel le détecteur de neutrons thermiques est une chambre à fission contenant de l'Uranium U235.

9. Dispositif de mesure selon l'une quelconque des revendications 1 à 6 dans lequel, le détecteur de neutrons rapides étant une chambre à fission et le détecteur de neutrons thermiques étant un collectron, les sensibilités évolutives $I_{11}(t_n)$, $I_{12}(t_n)$, $I_{21}(t_n)$ et $I_{22}(t_n)$ s'écrivent, respectivement :

$$I_{11}(t_n) = \sum_i N_i(t_n) \int_{E_{\min}}^{E_{\max}} f_1(E)\, \sigma_i^f(E)\, dE \ ,$$

et

$$I_{12}(t_n) = \sum_i N_i(t_n) \int_{E_{\min}}^{E_{\max}} f_2(E,\theta)\, \sigma_i^f(E)\, dE$$

où $N_i(t_n)$ est la composition isotopique à l'instant $t_n$ d'un isotope i du matériau apte à détecter principalement des neutrons rapides et $\sigma_j^f(E)$ est la section efficace de l'isotope i ; et

$$I_{21}(t_n) = \bigcup \left[\Psi(t_n)\right] \int_{E_{\min}}^{E_{\max}} f_1(E)\, s_{Rh}(E)\, dE$$

$$I_{22}(t_n) = \bigcup \left[\Psi(t_n)\right] \int_{E_{min}}^{E_{max}} f_2(E,\theta)\, s_{Rh}(E)\, dE$$

où U [Ψ(t$_n$)] est une fonction d'usure du collectron tabulée en fonction de la fluence thermique à l'instant t$_n$ Ψ(t$_n$) du matériau apte à détecter principalement des neutrons thermiques et S$_{Rh}$(E) est la sensibilité du collectron.

**10.** Dispositif de mesure selon la revendication 9 dans lequel le détecteur de neutrons thermiques est un collectron au Rhodium ou au Vanadium ou à l'Argent.

**11.** Dispositif de mesure selon l'une quelconque des revendications 7 à 10, dans lequel le détecteur de neutrons rapides est une chambre à fission avec un dépôt fissile à seuil.

**12.** Dispositif de mesure selon la revendication 11, dans lequel la chambre à fission est une chambre à fission contenant du plutonium Pu242 pur à au moins 99,5%.

**13.** Dispositif de mesure selon la revendication 12, dans lequel la chambre à fission contenant du plutonium Pu242 pur à au moins 99,5% comprend :

   * une enceinte (1, 20) apte à contenir un gaz de détection sous pression et dont les parois laissent passer les neutrons,
   * une première et une seconde électrode (21, 26, 120), isolées électriquement l'une de l'autre, entre lesquelles une tension peut être appliquée,
   * une matière fissile, comportant du plutonium 242 pur à au moins 99,5 % atomique, disposée sur l'une au moins des deux électrodes, et
   * un gaz de détection, inclus dans l'enceinte sous pression, ionisable par des produits de fissions.

**14.** Dispositif de mesure selon la revendication 13, dans lequel l'une parmi les première et seconde électrodes fait partie de l'enceinte, les électrodes étant alors appelées électrode externe (1) et électrode interne (2).

**15.** Dispositif de mesure selon la revendication 14, dans lequel la matière fissile (3) est disposée sur une paroi de l'électrode interne.

**16.** Dispositif de mesure selon l'une quelconque des revendications 13 à 15, dans lequel le gaz de détection est de l'argon additionné de 4% d'azote.

**17.** Dispositif de mesure selon la revendication 11, dans lequel le détecteur de neutrons rapides est une chambre à fission contenant du Neptunium Np237, ou de l'Uranium U238, ou du Thorium Th232.

**18.** Dispositif de mesure selon l'une quelconque des revendications précédentes, dans lequel le premier circuit électronique (C1) comprend un processeur numérique de calcul de variance qui délivre le signal numérique VR(t$_n$) sous la forme d'une variance numérique du signal délivré par le détecteur de neutrons rapides.

**19.** Dispositif de mesure selon l'une quelconque des revendications précédentes, dans lequel le second circuit électronique (C2) comprend un processeur numérique de calcul de variance qui délivre le signal numérique VT(t$_n$) sous la forme d'une variance numérique du signal délivré par le détecteur de neutrons thermiques.

**20.** Dispositif de mesure selon l'une quelconque des revendications 1 à 18, dans lequel le second circuit électronique (C2) est un circuit numérique de conversion courant-tension.

**Claims**

**1.** A device for online measurement of a flow of fast and epithermal neutrons φ$_1$(t$_n$) at instants t$_n$ over an energy interval [E$_{min}$, E$_{max}$], comprising:

   - a fast neutron detector (DNR) containing material suitable for detecting principally fast neutrons;

- a thermal neutron detector (DNT) containing material suitable for detecting principally thermal neutrons;
- a first electronic circuit (C1) which delivers, at instants $t_n$, a digital signal $VR(t_n)$ from a detection signal delivered by the fast neutron detector;
- a second electronic circuit (C2) which delivers, at instants $t_n$, a second digital signal $VT(t_n)$ from a detection signal delivered by the thermal neutron detector;
- means (PMM, CE) arranged to determine, at instants $t_n$, the isotopic composition of the fast neutron detecting material and the isotopic composition of the thermal neutron detecting material;
- means (PMM, CE) arranged to determine, at instants $t_n$, from the said isotopic compositions, the progressive sensitivity to the fast neutrons $I_{11}(t_n)$ of the fast neutron detector, the progressive sensitivity to the thermal neutrons $I_{12}(t_n)$ of the fast neutron detector, the progressive sensitivity to the fast neutrons $I_{21}(t_n)$ of the thermal neutron detector and the progressive sensitivity to the thermal neutrons $I_{22}(t_n)$ of the thermal neutrons detector,
- means for computation (CALC) arranged to calculate, at instants $t_n$, the flow of fast and epithermal neutrons $\varphi1(t_n)$ and a flow of thermal neutrons $\varphi2(t_n)$, from the following system of equations:

$$VR(t_n) = KR \times I_{11}(t_n) \times \varphi1(t_n) + KR \times I_{12}(t_n) \times \varphi2(t_n),$$

and

$$VT(t_n) = KT \times I_{21}(t_n) \times \varphi1(t_n) + KT \times I_{22}(t_n) \times \varphi2(t_n)$$

where KR and KT are, respectively, a coefficient for calibration of the fast neutron detector and a coefficient for calibration of the thermal neutron detector.

2. A measuring device according to claim 1, **characterised in that** it also includes means (CALC) for computing a full neutron flow $\varphi(t_n, E)$ using the following equation :

$$\varphi(t_n, E) = \varphi_1(t_n) \cdot f_1(E) + \varphi_2(t_n) \cdot f_2(E, \theta),$$

where

- $f_1(E) = f_{fiss}(E) + \alpha f_{epi}(E)$, and
- $f_2(E, \theta) = f_{mxw}(E, \theta),$

where $f_{fiss}(E)$ is a fission component of the flow of neutrons, where $f_{epi}(E)$ is an epithermal component of the flow of neutrons, where $f_{mxw}(E, \theta)$ is a Maxwellian component of the flow of neutrons, and where $\alpha$ is a coefficient of proportionality between the epithermal component of the flow of neutrons and the fission component of the flow of neutrons.

3. A device according to claim 1, **characterised in that** it also includes means (CALC) for computing, over the interval $[E_{min}, E_{max}]$, $N_r$ integrated results at instants $t_n$, where $N_r$ is an integer greater than or equal to 1, and where an integrated result of order k (k=1, 2, ..., $N_r$) is given by the following equation:

$$R_k(t_n) = m_{k1} \cdot \varphi_1(t_n) + m_{k2}(\theta) \cdot \varphi_2(t_n)$$

with

$$m_{k1} = \int_{E_{min}}^{E_{max}} f_1(E) \cdot Y_k(E) \, dE,$$

and

$$m_{k2} = \int_{E_{min}}^{E_{max}} f_2(E,\theta_0) \cdot Y_k(E)\, dE\ ,$$

where

- $f_1(E) = f_{fiss}(E) + \alpha\, f_{epi}(E)$, and
- $f_2(E, \theta) = f_{mxw}(E, \theta)$,

where $f_{fiss}(E)$ is a fission component of the flow of neutrons, where $f_{epi}(E)$ is an epithermal component of the flow of neutrons, where $f_{mxw}(E, \theta)$ is a Maxwellian component of the flow of neutrons, and where $\alpha$ is a coefficient of proportionality between the epithermal component of the flow of neutrons and the fission component of the flow of neutrons, and where

- $Y_k(E)$ is a response function which characterises the complete result of order k.

4. A measuring device according to claim 3, in which the response function $Y_k(E)$ is an identification function of an energy band of interest $[E_a, E_b]$ which coincides with the interval $[E_{min}, E_{max}]$ or which is included in the interval $[E_{min}, E_{max}]$ such that:

$$Y_k(E) = 1 \quad \text{if} \quad E_a < E < E_b$$

and

$$Y_k(E) = 0$$

otherwise
such that $R_k(t_n)$ is the flow of neutrons the energy of which is between $E_a$ and $E_b$, namely:

$$R_k(t_n) = \int_{E_a}^{E_b} \varphi(t_n, E) dE\ .$$

5. A measuring device according to claim 3, in which the response function $Y_k(E)$ is an effective macroscopic section of reaction $\Sigma_r(E)$ such that:

$$\Sigma_r(E) = \sum_i N_i' \cdot \sigma_i^r(E)\ ,$$

where

$N_i'$ is a number of atoms of an isotope i present in a medium and $\sigma_i^r(E)$ is an effective microscopic section of isotope i with regards to a reaction r in the medium, such that $R_k(t_n)$ is a rate of reaction r in the medium, namely:

$$R_k(t_n) = \int_{E_{min}}^{E_{max}} \varphi(t_n, E)\, \Sigma_r(E) dE$$

6. A measuring device according to claim 5, in which the reaction r is a fission or capture or diffusion or damage reaction.

7. A measuring device according to any of the previous claims in which, since the fast neutron detector and the thermal neutron detector are fission chambers, the progressive sensitivities $I_{11}(t_n)$, $I_{12}(t_n)$, $I_{21}(t_n)$ and $I_{22}(t_n)$ are written respectively:

$$I_{11}(t_n) = \sum_i N_i(t_n) \int_{E_{min}}^{E_{max}} f_1(E)\, \sigma_i^f(E)\, dE$$

$$I_{12}(t_n) = \sum_i N_i(t_n) \int_{E_{min}}^{E_{max}} f_2(E,\theta)\, \sigma_i^f(E)\, dE$$

where $N_i(t_n)$ is the isotopic composition at instant $t_n$ of an isotope i of the material suitable for detecting principally fast neutrons, and $\sigma_i^f(E)$ is the effective section of isotope i; and

$$I_{21}(t_n) = \sum_j N_j(t_n) \int_{E_{min}}^{E_{max}} f_1(E)\, \sigma_j^f(E)\, dE$$

$$I_{22}(t_n) = \sum_j N_j(t_n) \int_{E_{min}}^{E_{max}} f_2(E,\theta)\, \sigma_j^f(E)\, dE$$

where $N_j(t_n)$ is the isotopic composition at instant $t_n$ of an isotope j of the material suitable for detecting principally thermal neutrons, and $\sigma_j^f(E)$ is the effective section of isotope j.

8. A measuring device according to claim 7, in which the thermal neutron detector is a fission chamber containing Uranium U235.

9. A measuring device according to any of the claims 1 to 6, in which, since the fast neutron detector is a fission detector and the thermal neutron detector is a collectron, the progressive sensitivities $I_{11}(t_n)$, $I_{12}(t_n)$, $I_{21}(t_n)$ and $I_{22}(t_n)$ are written respectively:

$$I_{11}(t_n) = \sum_i N_i(t_n) \int_{E_{min}}^{E_{max}} f_1(E)\, \sigma_i^f(E)\, dE \ ,$$

and

$$I_{12}(t_n) = \sum_i N_i(t_n) \int_{E_{min}}^{E_{max}} f_2(E,\theta)\, \sigma_i^f(E)\, dE$$

where $N_i(t_n)$ is the isotopic composition at instant $t_n$ of an isotope i of the material suitable for detecting principally fast neutrons, and $\sigma_j^f(E)$ is the effective section of isotope i; and

$$I_{21}(t_n) = \bigcup \left[\Psi(t_n)\right] \int_{E_{min}}^{E_{max}} f_1(E)\, s_{Rh}(E)\, dE$$

$$I_{22}(t_n) = \bigcup \left[\Psi(t_n)\right] \int_{E_{min}}^{E_{max}} f_2(E, \theta)\, s_{Rh}(E)\, dE$$

where $U[\Psi(t_n)]$ is a wear and tear function of the collection tabulated as a function of the thermal fluence at instant $t_n$ $U[\Psi(t_n)]$ of the material suitable for detecting principally thermal neutrons, and $S_{Rh}(E)$ is the sensitivity of the collectron.

10. A measuring device according to claim 9 in which the thermal neutron detector is a Rhodium or Vanadium or Silver collectron.

11. A measuring device according to any of the claims 7 to 10, in which the fast neutron detector is a fission chamber with a threshold fissile deposit.

12. A measuring device according to claim 11, in which the fission chamber is a fission chamber containing plutonium Pu242 pure to at least 99.5%.

13. A measuring device according to claim 12, in which the fission chamber containing plutonium Pu242 pure to at least 99.5% includes:

* an enclosure (1, 20) able to contain a pressurised detection gas, and the walls of which allow the neutrons to traverse them,
* a first and a second electrode (21, 26, 120), electrically insulated from one another, between which a voltage may be applied,
* a fissile material, including plutonium 242 pure to at least 99.5% atomic, deposited on at least one of the two electrodes, and
* a detection gas, included in the pressurised enclosure, ionisable by fission products.

14. A measuring device according to claim 13, in which either one of the first and second electrodes forms part of the enclosure, and where the electrodes are then called the outer electrode (1) and the inner electrode (2).

15. A measuring device according to claim 14, in which the fissile material (3) is deposited on a wall of the inner electrode.

16. A measuring device according to any of the claims 13 to 15, in which the detection gas is argon to which 4% nitrogen is added.

17. A measuring device according to claim 11, in which the fast neutron detector is a fission chamber containing Neptunium Np237, or Uranium U238, or Thorium Th232.

18. A measuring device according to any of the previous claims, in which the first electronic circuit (C1) includes a digital variance computation processor which delivers the digital signal $VR(t_n)$ in the form of a digital variance of the signal delivered by the fast neutron detector.

19. A measuring device according to any of the previous claims, in which the second electronic circuit (C2) includes a digital variance computation processor which delivers the digital signal $VT(t_n)$ in the form of a digital variance of the signal delivered by the thermal neutron detector.

20. A measuring device according to any of the claims 1 to 18, in which the second electronic circuit (C2) is a digital current-voltage conversion circuit.

**Patentansprüche**

1.  Vorrichtung zur Online-Messung eines Flusses schneller und epithermischer Neutronen $\varphi_1(t_n)$ zu Zeitpunkten $t_n$ in einem Energieintervall $[E_{min}, E_{max}]$, umfassen:

    - einen Detektor schneller Neutronen (DNR), der ein zur Detektion hauptsächlich schneller Neutronen befähigtes Material enthält;
    - einen Detektor thermischer Neutronen (DNT), der ein zur Detektion hauptsächlich thermischer Neutronen befähigtes Material enthält;
    - eine erste elektronische Schaltung (C1), die zu Zeitpunkten $t_n$ infolge eines durch den Detektor schneller Neutronen gelieferten Detektionssignals ein digitales Signal $VR(t_n)$ liefert;
    - eine zweite elektronische Schaltung (C2), die zu Zeitpunkten $t_n$ infolge eines durch den Detektor thermischer Neutronen gelieferten Detektionssignals ein zweites digitales Signal $VT(t_n)$ liefert;
    - Einrichtungen (PMM, CE), fähig zu Zeitpunkten $t_n$ die isotopische Zusammensetzung des Detektionsmaterials der schnellen Neutronen und die isotopische Zusammensetzung des Detektionsmaterials der thermischen Neutronen zu bestimmen;
    - Einrichtungen (PMM, CE), fähig zur Bestimmung, zu Zeitpunkten $t_n$, infolge der genannten isotopischen Zusammensetzungen : die evolutive Empfindlichkeit des Detektors schneller Neutronen für die schnellen Neutronen $I_{11}(t_n)$, die evolutive Empfindlichkeit des Detektors schneller Neutronen für die thermischen Neutronen $I_{12}(t_n)$, die evolutive Empfindlichkeit des Detektors thermischer Neutronen für die schnellen Neutronen $I_{21}(t_n)$ und die evolutive Empfindlichkeit des Detektors thermischer Neutronen für die thermischen Neutronen $I_{22}(t_n)$,
    - Recheneinrichtungen (CALC), fähig zur Berechnung des Flusses schneller und epithermischer Neutronen $\varphi_1(t_n)$ zu den Zeitpunkten $t_n$ und eines Flusses thermischer Neutronen $\varphi_2(t_n)$ aufgrund des Gleichungssystems :

    $$VR(t_n) = KR \times I_{11}(t_n) \times \varphi_1(t_n) + KR \times I_{12}(t_n) \times \varphi_2(t_n),$$

    und

    $$VT(t_n) = KT \times I_{21}(t_n) \times \varphi_1(t_n) + KT \times I_{22}(t_n) \times \varphi_2(t_n)$$

    wo KR und KT jeweils ein Eichkoeffizient des Detektors schneller Neutronen und ein Eichkoeffizient des Detektors thermischer Neutronen sind.

2.  Messvorrichtung nach Anspruch 1, **dadurch gekennzeichnet, dass** sie außerdem Einrichtungen (CALC) zur Berechnung eines kompletten Neutronenflusses $\varphi(t_n, E)$ mit Hilfe folgender Gleichung umfasst:

    $$\varphi(t_n, E) = \varphi_1(t_n) \cdot f_1(E) + \varphi_2(t_n) \cdot f_2(E, \theta), \quad wo$$

    - $f_1(E) = f_{fiss}(E) + \alpha\, f_{epi}(E)$ und
    - $f_2(E, \theta) = f_{mxw}(E, \theta)$ ist,

    wobei $f_{fiss}(E)$ eine Spaltkomponente des Neutronenflusses ist, $f_{epi}(E)$ eine epithermische Komponente des Neutronenflusses ist, $f_{mxw}(E, \theta)$ eine Maxwell-Komponente des Neutronenflusses ist und $\alpha$ ein Proportionalitätskoeffizient zwischen der epithermischen Komponente des Neutronenflusses und der Spaltkomponente des Neutronenflusses ist.

3.  Vorrichtung nach Anspruch 1, **dadurch gekennzeichnet, dass** sie außerdem Einrichtungen (CALC) umfasst, fähig in dem Intervall $[E_{min}, E_{max}]$ $N_r$ zu den Zeitpunkten $t_n$ integrale Resultate zu berechnen, wobei $N_r$ eine ganze Zahl größer oder gleich 1 ist und ein integrales Resultat des Rangs k (k=1, 2, ..., $N_r$) durch folgende Gleichung geliefert wird :

    $$R_k(t_n) = m_{k1} \cdot \varphi_1(t_n) + m_{k2}(\theta) \cdot \varphi_2(t_n)$$

mit

$$m_{k1} = \int_{E_{min}}^{E_{max}} f_1(E) \cdot Y_k(E)\, dE;$$

und

$$m_{k2} = \int_{E_{min}}^{E_{max}} f_2(E, \theta_o) \cdot Y_k(E)\, dE;$$

wo

- $f_1(E) = f_{fiss(E)} + \alpha\, f_{epi}(E)$, und
- $f_2(E, \theta)) = f_{mxw}(E, \theta)$,

wobei $f_{fiss}(E)$ eine Spaltkomponente des Neutronenflusses ist, $f_{epi}(E)$ eine epithermische Komponente des Neutronenflusses ist, $f_{mxw}(E, 8)$ eine Maxwell-Komponente des Neutronenflusses ist und a ein Proportionalitätskoeffizient zwischen der epithermischen Komponente des Neutronenflusses und der Spaltkomponente des Neutronenflusses ist, und wo

- $Y_k(E)$ eine Antwortfunktion ist, welche das integrale Resultat des Ranges k kennzeichnet.

4. Messvorrichtung nach Anspruch 3, bei der die Antwortfunktion $Y_k(E)$ eine Funktion zu Identifizierung eines interessanten bzw. vorteilhaften Energiebandes $[E_{min}, E_{max}]$ ist, das mit dem Intervall $[E_{min}, E_{max}]$ zusammenfällt oder in dem Intervall $[E_{min}, E_{max}]$ enthalten ist, so dass :

$$Y_k(E) = 1 \quad \text{wenn} \quad E_a < E < E_b$$

und

$$Y_k(E) = 0$$

wenn nicht,
so dass $R_k(t_n)$ der Neutronenfluss ist, dessen Energie enthalten ist zwischen $E_a$ und $E_b$, nämlich

$$R_k(t_n) = \int_{E_a}^{E_b} \varphi(t_n, E)\, dE$$

5. Messvorrichtung nach Anspruch 3, bei der die Antwortfunktion $Y_k(E)$ ein makroskopischer Reaktionswirkungsquerschnitt $\Sigma_r(E)$ ist, wie z. B.:

$$\sum_r (E) = \sum_i N'_i \cdot \sigma_i^r(E), \quad \text{wo}$$

$N_i'$ eine Anzahl Atome eines in einem Medium vorhandene vorhandenen Isotops ist und $\sigma_i^r$ ein mikroskopischer Wirkungsquerschnitt des Isotops i gegenüber einer Reaktion r in dem Medium, so dass $R_k(t_n)$ eine Quote der Reaktion r in dem Medium ist, nämlich:

$$R_k(t_n) = \int_{E_{min}}^{E_{max}} \varphi(t_n, E) \sum_r (E)dE$$

6. Messvorrichtung nach Anspruch 5, bei der die Reaktion r eine Reaktion des Typs Spaltung, Einfang, Diffusion oder Beschädigung ist.

7. Messvorrichtung nach einem der vorhergehenden Ansprüche, bei der der Detektor schneller Neutronen und der Detektor thermischer Neutronen Spaltkammern sind, wobei sich die evolutionären Empfindlichkeiten $I_{11}(t_n)$, $I_{12}(t_n)$, $I_{21}(t_n)$ und $I_{22}(t_n)$ jeweils folgendermaßen schreiben :

$$I_{11}(t_n) = \sum_i N_i(t_n) \int_{E_{min}}^{E_{max}} f_1(E)\, \sigma_i^f(E)dE$$

$$I_{12}(t_n) = \sum_i N_i(t_n) \int_{E_{min}}^{E_{max}} f_2(E,\theta)\, \sigma_i^f(E)dE$$

wo $N_i(t_n)$ die isotopische Zusammensetzung zum Zeitpunkt $t_n$ eines Isotops i des hauptsächlich zur Detektion der schnellen Neutronen befähigten Materials ist, und $\sigma_i^f(E)$ der Wirkungsquerschnitt des Isotops i ist; und

$$I_{21}(t_n) = \sum_j N_j(t_n) \int_{E_{min}}^{E_{max}} f_1(E)\, \sigma_j^f(E)dE$$

$$I_{22}(t_n) = \sum_j N_j(t_n) \int_{E_{min}}^{E_{max}} f_2(E,\theta)\, \sigma_j^f(E)dE$$

wo $N_j(t_n)$ die isotopische Zusammensetzung zum Zeitpunkt $t_n$ eines Isotops j des hauptsächlich zur Detektion der thermischen Neutronen befähigten Materials ist, und $\sigma_j^f(E)$ der Wirkungsquerschnitt des Isotops j ist.

8. Messvorrichtung nach Anspruch 7, bei der der Detektor thermischer Neutronen eine Spaltkammer ist, die Uran U235 enthält.

9. Messvorrichtung nach einem der Ansprüche 1 bis 6, bei der der Detektor schneller Neutronen eine Spaltkammer ist und der Detektor thermischer Neutronen eine Kollektron ist, wobei die evolutiven Empfindlichkeiten $I_{11}(t_n)$, $I_{12}(t_n)$, $I_{21}(t_n)$ und $I_{22}(t_n)$ sich jeweils schreiben :

$$I_{11}(t_n) = \sum_i N_i(t_n) \int_{E_{min}}^{E_{max}} f_1(E)\, \sigma_i^f(E)dE$$

und

$$I_{12}(t_n) = \sum_i N_i(t_n) \int_{E_{min}}^{E_{max}} f_2(E, \theta)\, \sigma_i^f(E)\, dE$$

wo $N_i(t_n)$ die isotopische Zusammensetzung zum Zeitpunkt $t_n$ eines Isotops i des hauptsächlich zur Detektion der schnellen Neutronen befähigten Materials ist, und $\sigma_i^f(E)$ der Wirkungsquerschnitt des Isotops i eist; und

$$I_{21}(t_n) = \bigcup\left[\psi(t_n)\right] \int_{E_{min}}^{E_{max}} f_1(E)\, S_{Rh}(E)\, dE$$

$$I_{22}(t_n) = \bigcup\left[\psi(t_n)\right] \int_{E_{min}}^{E_{max}} f_2(E, \theta)\, S_{Rh}(E)\, dE$$

wo $U[\psi(t_n)]$ eine Abnutzungsfunktion des Kollektrons, tabelliert in Abhängigkeit von der thermischen Fluenz zum Zeitpunkt $t_n$ $\psi(t_n)$ des hauptsächlich zur Detektion der thermischen Neutronen befähigten Materials ist und $S_{RH}(E)$ die Empfindlichkeit des Kollektrons ist.

10. Messvorrichtung nach Anspruch 9, bei der der Detektor thermischer Neutronen ein Kollektron für Rhodium oder Vanadium oder Silber ist.

11. Messvorrichtung nach einem der Ansprüche 7 bis 10, bei der der Detektor schneller Neutronen eine Spaltkammer mit einer Spaltschwellenabscheidung ist.

12. Messvorrichtung nach Anspruch 11, bei der die Spaltkammer eine zu wenigstens 99,5 % reines Plutonium PU242 enthaltende Spaltkammer ist.

13. Messvorrichtung nach Anspruch 12, bei der die zu wenigstens 99,5 % reines Plutonium PU242 enthaltende Spaltkammer umfast:

   * ein Gehäuse (1, 20), das ein Detektionsgas unter Druck enthält und dessen Wände die Neutronen durchlassen,
   * eine erste und eine zweite Elektrode (21, 26, 120), die elektrisch voneinander isoliert sind und zwischen denen eine Spannung angelegt werden kann,
   * ein zu wenigstens 99,5 Atom% reines Plutonium 242 enthaltendes spaltbares Material, abgeschieden auf wenigstens einer der beiden Elektroden, und
   * ein Detektionsgas unter Druck, eingeschlossen in dem Gehäuse und ionisierbar durch Spaltprodukte.

14. Messvorrichtung nach Anspruch 13, bei der eine der genannten Elektroden, die erste oder die zweite, Teil des Gehäuse ist, wobei die Elektroden dann äußere Elektrode (1) und innere Elektrode (2) genannt werden.

15. Messvorrichtung nach Anspruch 14, bei der das spaltbare Material (3) auf einer Wand der inneren Elektrode abgeschieden ist.

16. Messvorrichtung nach einem der Ansprüche 13 bis 15, bei der das Detektionsgas Argon mit zusätzlich 4 % Stickstoff ist.

17. Messvflrrichtung nach Anspruch 11, bei dem der Detektor schneller Neutronen eine Spaltkammer ist, die Neptunium Np237 oder Uran U238 oder Thorium Th232 enthält.

18. Messvorrichtung nach einem der vorhergehenden Ansprüche, bei dem die erste elektronische Schaltung (C1) einen digitalen Varianzberechnungsprozessor umfasst, der das digitale Signal VR($t_n$) in Form einer digitalen Varianz des durch den Detektor schneller Neutronen gelieferten Signals liefert.

**19.** Messvorrichtung nach einem der vorhergehenden Ansprüche, bei dem die zweite elektronische Schaltung (C2) einen digitalen Varianzberechnungsprozessor umfasst, der das digitale Signal $VT(t_n)$ in Form einer digitalen Varianz des durch den Detektor thermischer Neutronen gelieferten Signals liefert.

**20.** Messvorrichtung nach einem der Ansprüche 1 bis 18, bei dem die zweite elektronische Schaltung (C2) eine digitale Strom-Spannungs-Wandlerschaltung ist.

# FIG.1A

# FIG.1B

FIG.2

FIG.3

FIG.4

EP 2 338 157 B1

FIG.5

FIG.6

## EP 2 338 157 B1

### RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2727526
- FR 0760229

- FR 2925750
- FR 9414293

**Littérature non-brevet citée dans la description**

- Thermal and fast neutron detection in chemical vapor deposition single-crystal diamond detectors. *Journal of Applied Physics,* 03 Mars 2008, vol. 103, 054501
- **D. BERETZ et al.** French PWR Vessel Surveillance Program Dosimetry Experience Feedback from More than a Hundred Capsules. *Reactor Dosimetry ASTM STP 1398,* 2000
- **Y. KASHCHUK et al.** Monitoring the Fast Neutron Flux Density and Fluence in a RBMK Core Using a Threshold Fission Chamber in a Screen-Absorber. *Atomic Energy,* 2005, vol. 98 (4), 249

- **G.F. KNOLL.** Radiation Detection and Measurement. John Wiley & Sons, 1999
- **A. TSILANIZARA et al.** DARWIN : « An evolution code system for a large range of applications ». *J. Nucl. Sci. Technol.,* 2000, vol. 37, 845
- Absolute on-line in-pile measurement of neutron fluxes using self-powered neutron detectors. **L. VERMEEREN.** 5th International Topical Meeting on Research Reactor Fuel Management. Org. European Nuclear Society, 01 Avril 2001